# EUROPEAN PATENT APPLICATION

(11) **EP 4 832 578 A1**
(43) Date of publication of application: **28.10.2026**
(21) Application number: 25744587.4
(22) Date of filing: 21.01.2025
(51) Int. Cl.: H04W 36/00

(54) **COMMUNICATION METHOD, APPARATUS, AND SYSTEM**

(30) Priority: 24.01.2024 CN 202410103236
(71) Applicant: Huawei Technologies Co., Ltd., Shenzhen, Guangdong 518129 (CN)
(72) Inventor: QIAO, Yunfei, Shenzhen, Guangdong 518129 (CN); WANG, Yu, Shenzhen, Guangdong 518129 (CN)
(74) Representative: Pfenning, Meinig & Partner mbB
(86) International application number: PCT/CN2025/073757
(87) International publication number: WO 2025/157148

(57) **Abstract**

This specification relates to the communication field and discloses a communication method, apparatus, and system, to address the problem of excessive delay when a source communication apparatus relays a context to a target communication apparatus through a core network device or an inter-orbit satellite base station, in scenarios where a communication apparatus (for example, an access network apparatus or a core network apparatus) that provides a service for a terminal apparatus is switched from the source communication apparatus to the target communication apparatus. The method includes: A first communication apparatus obtains a context from a second communication apparatus that provides a service for the first communication apparatus, and sends the context to a third communication apparatus that replaces the second communication apparatus to provide a service for the first communication apparatus, where the context is a context of a terminal apparatus served by the second communication apparatus. The solutions of this application may be widely applied to the fields of communication technologies, artificial intelligence, internet of vehicles, smart home networking, and the like.

## Description

This application claims priority to Chinese Patent Application No. 202410103236.1, filed with the China National Intellectual Property Administration on January 24, 2024 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

The convergence of a satellite communication network and a terrestrial 5th generation mobile communication technology (5th generation mobile communication technology, 5G) network enables ubiquitous coverage without topographical constraints. In such a converged network, a satellite base station is deployed on a non-geostationary earth orbit (non-geostationary earth orbit, NGEO). Compared with a terminal (user equipment, UE), the satellite base station is in high-speed motion. Therefore, UEs in a connected state need to be frequently handed over between different satellite cells to ensure service continuity.

When a UE is handed over from a cell of a source satellite base station deployed on an orbit-ascending satellite to a cell of a target satellite base station deployed on an orbit-descending satellite, the relative velocity between the orbit-ascending and orbit-descending satellites is extremely high, making it difficult to establish an available inter-satellite link. In this case, the source satellite base station may relay a context of a terminal in the source satellite base station to the target satellite base station through a core network device or an inter-orbit satellite base station, so that the target satellite base station can establish a connection to the UE based on the context of the terminal.

However, relaying the context of the terminal in the source satellite base station through the core network device or the inter-orbit satellite base station requires the source satellite base station to first send the context of the terminal to the core network device or the inter-orbit satellite base station, which then forwards the context to the target satellite base station. This introduces significant delay in sending the context of the terminal between the source satellite base station and the target satellite base station.

### SUMMARY

Embodiments of this application provide a communication method, apparatus, and system, to address the problem of excessive delay when a source communication apparatus relays a context to a target communication apparatus through a core network device or an inter-orbit satellite base station, in scenarios where a communication apparatus (for example, an access network apparatus or a core network apparatus) that provides a service for a terminal apparatus is switched from the source communication apparatus to the target communication apparatus.

To achieve the foregoing objective, this application uses the following technical solutions.

According to a first aspect, an embodiment of this application provides a communication method. The method may be performed by a first communication apparatus and a functional module or a chip in the first communication apparatus. For example, the method is performed by the first communication apparatus. The method includes: obtaining a context from a second communication apparatus; and sending the context to a third communication apparatus. The context is a context of a terminal apparatus served by the second communication apparatus, and the second communication apparatus is a communication apparatus that provides a service for the first communication apparatus. The third communication apparatus is a communication apparatus that replaces the second communication apparatus to provide a service for the first communication apparatus.

Based on the method according to the first aspect, after obtaining the context of the second communication apparatus, the first communication apparatus sends the context to the third communication apparatus, where the context is the context of the terminal apparatus served by the second communication apparatus, so that the second communication apparatus no longer needs to relay the context of the terminal apparatus served by the second communication apparatus to the third communication apparatus through a core network device or an inter-orbit satellite base station, thereby reducing a transmission delay of relaying the context of the terminal apparatus served by the second communication apparatus, and reducing a handover delay.

In a possible design, in the communication method according to the first aspect, the first communication apparatus is the terminal apparatus, the second communication apparatus is a first access network apparatus, and the third communication apparatus is a second access network apparatus.

Based on this possible design, an actual communication scenario to which the communication method provided in this embodiment of this application is applicable is provided. For example, in a communication scenario in which the first communication apparatus is the terminal apparatus, the second communication apparatus is the first access network apparatus, and the third communication apparatus is the second access network apparatus, after obtaining the context of the terminal apparatus served by the first access network apparatus, the terminal apparatus may send, to the second access network apparatus, the context of the terminal apparatus served by the first access network apparatus. The first access network apparatus is a communication apparatus that provides a service for the terminal apparatus, and the second access network apparatus is a communication apparatus that replaces the first access network apparatus to provide a service for the terminal apparatus. Therefore, the first access network apparatus may send, through the terminal apparatus, the context of the terminal apparatus served by the first access network apparatus to the second access network apparatus. In comparison with a case in which the first access network apparatus relays the context of the terminal apparatus served by the first access network apparatus to the second access network apparatus through the core network device or the inter-orbit satellite base station, a delay of relaying the context of the terminal apparatus served by the first access network apparatus is reduced.

In a possible design, the first communication apparatus is the terminal apparatus, the second communication apparatus is a first access network apparatus, and the third communication apparatus is a second access network apparatus. That the first communication apparatus sends the context to the third communication apparatus includes: receiving first indication information from the second access network apparatus, and sending the context to the second access network apparatus by using a first time-frequency resource indicated by the first indication information.

Based on this possible design, in a communication scenario in which the first communication apparatus is the terminal apparatus, the second communication apparatus is the first access network apparatus, and the third communication apparatus is the second access network apparatus, first indication information indicating the first time-frequency resource is provided, so that the terminal apparatus may send the context to the second access network apparatus on the first time-frequency resource indicated by the first indication information, thereby avoiding waste of transmission resources caused by blind context transmission by the terminal.

In a possible design, the first indication information is carried in a random access response; or the first indication information is carried in radio resource control (radio resource control, RRC) signaling. For example, the first indication information may be carried in uplink context grant (UL grant for UE context) signaling.

Based on this possible design, in different communication scenarios, messages that may carry the first indication information are provided. Specifically, in a random access procedure of the terminal apparatus, the first indication information may be carried in the random access response; and in a process in which the terminal apparatus resumes a connected state from an inactive state, the first indication information may be carried in the RRC signaling. In this way, for different scenarios, different messages are used to carry the first indication information, and this solution is flexibly and diversely applied to various communication scenarios, thereby improving utilization of this solution.

In a possible design, the first communication apparatus is the terminal apparatus, the second communication apparatus is a first access network apparatus, and the third communication apparatus is a second access network apparatus. That the first communication apparatus sends the context to the third communication apparatus further includes: sending second indication information to the second access network apparatus. The second indication information indicates to send the context to the second access network apparatus.

Based on this possible design, in a communication scenario in which the first communication apparatus is the terminal apparatus, the second communication apparatus is the first access network apparatus, and the third communication apparatus is the second access network apparatus, second indication information indicating to send the context to the second access network apparatus is provided. In this way, the terminal apparatus may send, by using the second indication information, the context to the second access network apparatus, and further, the second access network apparatus may receive the context based on an indication of the second indication information, so that the terminal sends the context to the second access network apparatus.

In a possible design, the second indication information is carried in a random access request; or the second indication information is carried in an RRC resume request message. For example, the second indication information may be carried in radio resource control resume request (RRC resume request) signaling specified in an existing wireless communication protocol.

Based on this possible design, in different communication scenarios, messages that may carry the second indication information are provided. Specifically, in a random access procedure of the terminal apparatus, the second indication information may be carried in the random access request; and in a process in which the terminal resumes a connected state from an inactive state, the second indication information may be carried in the RRC resume request message. In this way, for different scenarios, different messages are used to carry the second indication information, and this solution is flexibly and diversely applied to various communication scenarios, thereby improving utilization of this solution.

In a possible design, in the communication method according to the first aspect, the first communication apparatus is an access network apparatus, the second communication apparatus is a first core network apparatus, and the third communication apparatus is a second core network apparatus.

Based on this possible design, an actual communication scenario to which the communication method provided in this embodiment of this application is applicable is provided. For example, in a communication scenario in which the first communication apparatus is the access network apparatus, the second communication apparatus is the first core network apparatus, and the third communication apparatus is the second core network apparatus, the access network apparatus may obtain a context from the first core network apparatus, and then send the context to the second core network apparatus. The context is a context of a terminal apparatus served by the first core network apparatus, and the first core network apparatus is a communication apparatus that provides a service for the access network apparatus. The second core network apparatus is a communication apparatus that replaces the first core network apparatus to provide a service for the access network apparatus. Therefore, the first core network apparatus may send the context to the second core network apparatus through the access network apparatus, so that the second core network apparatus receives the context. Further, the terminal apparatus served by the access network apparatus does not need to re-initiate, to the second core network apparatus, a process of applying for resource allocation by the second core network apparatus, thereby reducing resource overheads of the terminal apparatus.

In a possible design, the first communication apparatus is an access network apparatus, the second communication apparatus is a first core network apparatus, and the third communication apparatus is a second core network apparatus. A next generation (next generation, NG) interface is established between the access network apparatus and the second core network apparatus. That the first communication apparatus sends the context to the third communication apparatus includes: sending next generation application protocol (next generation application protocol, NGAP) signaling to the second core network apparatus through the NG interface. The NGAP signaling carries the context.

Based on this possible design, in a scenario in which the first communication apparatus is the access network apparatus, the second communication apparatus is the first core network apparatus, and the third communication apparatus is the second core network apparatus, new NGAP signaling that carries the context is provided. Therefore, the access network apparatus may send the context of the terminal apparatus served by the first core network apparatus to the second core network apparatus by using the new NGAP signaling. In addition, the NGAP signaling specified in a standard is used to send the context of the terminal apparatus served by the first core network apparatus, thereby reducing signaling transmission overheads.

In a possible design, the first communication apparatus is the terminal apparatus, the second communication apparatus is a first access network apparatus, and the third communication apparatus is a second access network apparatus. That the first communication apparatus obtains the context from the second communication apparatus includes: receiving the context from the first access network apparatus based on RRC release signaling. The context is a context of a terminal apparatus served by the first core network apparatus, and the RRC release signaling may carry downlink scheduling information.

Based on this possible design, in a scenario in which the first communication apparatus is the terminal apparatus, the second communication apparatus is the first access network apparatus, and the third communication apparatus is the second access network apparatus, a specific process in which the terminal apparatus obtains the context based on the RRC release signaling is provided. In addition, the terminal apparatus may receive the context by using the RRC release signaling specified in a standard, thereby further reducing signaling overheads of the first access network apparatus.

In a possible design, that the first communication apparatus obtains the context from the second communication apparatus includes: The first communication apparatus sends, to the second communication apparatus, a first request message used to request the context, and further receives the context from the second communication apparatus. The context is a context of a terminal apparatus served by the second communication apparatus.

Based on this possible design, a specific process in which the first communication apparatus obtains the context by using the first request message is provided. In addition, a new first request message used to request the context is provided, so that the first communication apparatus can receive, by sending the request message to the second communication apparatus, the context of the terminal apparatus served by the second communication apparatus.

In a possible design, the first request message is a handover request message, or the first request message is a context request message. The context request message may be NGAP signaling carried in a user equipment context retrieval request (UE context retrieve request).

Based on this possible design, in different communication scenarios, specific messages of the first request messages used to request the context are provided. Specifically, in a handover process performed by the terminal apparatus, the first request message is the handover request message; and in a handover process performed by the access network apparatus, the first request message is the context request message. In this way, for different scenarios, different request messages are used to request the context, and this solution is flexibly and diversely applied to various communication scenarios, thereby improving utilization of this solution.

In a possible design, the communication method according to the first aspect further includes: The first communication apparatus receives update information from the third communication apparatus. The update information is used to update the context.

Based on this possible design, when the third communication apparatus updates the context, the first communication apparatus can obtain an updated context in the third communication apparatus by using the update information. Further, the first communication apparatus can successfully access the third communication apparatus based on the updated context.

In a possible design, the communication method according to the first aspect further includes: The first communication apparatus caches the context. Based on this possible design, the first communication apparatus may locally cache the context, so that when the first communication apparatus uses the context again, the first communication apparatus can quickly obtain the context locally, thereby increasing a response speed of obtaining the context by the first communication apparatus.

In a possible design, the context includes a key context of the terminal, and the key context of the terminal is used for secure context transmission. Based on this possible design, each communication apparatus can perform secure context transmission through an air interface.

In a possible design, the context does not include a key context of the terminal, and the key context of the terminal is generated by a core network apparatus based on a geographical area in which the terminal apparatus is located. Based on this possible design, the core network apparatus may generate the key context of the terminal for the terminal apparatus based on the geographical area, so that the third communication apparatus can obtain the key context of the terminal in the area from the core network apparatus in advance based on the geographical area in which the terminal apparatus is located, thereby avoiding transmission of the key context of the terminal through an open air interface, and achieving an objective of secure transmission of the key context of the terminal.

According to a second aspect, an embodiment of this application provides a communication method. The method may be performed by a second communication apparatus and a functional module or a chip in the second communication apparatus. For example, the method is performed by the second communication apparatus. The second communication apparatus is a communication apparatus that provides a service for a first communication apparatus. The method includes: The second communication apparatus obtains a context; and sends the context to the first communication apparatus. The context is a context of a terminal apparatus served by the second communication apparatus.

Based on the method according to the second aspect, the second communication apparatus sends the obtained context to the first communication apparatus, so that the first communication apparatus can directly obtain the context of the terminal apparatus served by the second communication apparatus. In addition, no additional communication apparatus is added to relay the context of the terminal apparatus served by the second communication apparatus. Therefore, no additional context transmission delay is added.

In a possible design, in the communication method according to the second aspect, the first communication apparatus is the terminal apparatus, and the second communication apparatus is a first access network apparatus.

Based on this possible design, an actual communication scenario to which the communication method provided in this embodiment of this application is applicable is provided. For example, in a communication scenario in which the first communication apparatus is the terminal apparatus and the second communication apparatus is the first access network apparatus, the first access network apparatus obtains the context, and further sends the context to the terminal apparatus. The first access network apparatus is a communication apparatus that provides a service for the terminal apparatus. In this way, the terminal apparatus can directly obtain the context of the terminal apparatus served by the first access network apparatus, and no additional communication apparatus for relaying the context of the terminal apparatus served by the first access network apparatus is added between the terminal apparatus and the first access network apparatus, so that no additional context transmission delay is added.

In a possible design, the first communication apparatus is the terminal apparatus, and the second communication apparatus is a first access network apparatus. The first access network apparatus is a communication apparatus that provides a service for the terminal apparatus. The method according to the second aspect further includes: The first access network apparatus sends RRC release signaling. The RRC release signaling indicates the terminal to receive the context. The context is a context of the terminal apparatus served by the first access network apparatus.

Based on this possible design, the first access network apparatus indicates, by using the RRC release signaling specified in a standard, the terminal to receive the context. In this way, signaling overheads of the first access network apparatus are reduced, and further, the terminal apparatus may receive the context based on an indication of the RRC release signaling, thereby reducing signaling overheads of receiving the indication by the terminal apparatus.

In a possible design, in the communication method according to the second aspect, the first communication apparatus is an access network apparatus, and the second communication apparatus is a first core network apparatus.

Based on this possible design, an actual communication scenario to which the communication method provided in this embodiment of this application is applicable is provided. For example, in a communication scenario in which the first communication apparatus is the access network apparatus and the second communication apparatus is the first core network apparatus, the first core network apparatus obtains the context, and further sends the context to the access network apparatus. The context is a context of a terminal apparatus served by the first core network apparatus, and the first core network apparatus is a communication apparatus that provides a service for the access network apparatus. In this way, the access network apparatus can directly obtain the context, and no additional communication apparatus for relaying the context is added between the access network apparatus and the first core network apparatus, so that no additional context transmission delay is added.

In a possible design, that the second communication apparatus sends the context to the first communication apparatus includes: The second communication apparatus receives, from the first communication apparatus, a first request message used to request the context, and sends the context to the first communication apparatus.

Based on this possible design, a specific process in which the second communication apparatus sends the context to the first communication apparatus by using the first request message is provided. In addition, a new first request message used to request the context is provided, so that the second communication apparatus can send the context to the first communication apparatus by using the received first request message.

In a possible design, the first request message is a handover request message, or the first request message is a context request message. For example, the context request message is NGAP signaling carried in a UE context retrieve request.

Based on this possible design, in different communication scenarios, specific messages of the first request messages used to request the context are provided. Specifically, in a handover process performed by the terminal apparatus, the first request message is the handover request message; and in a handover process performed by the access network apparatus, the first request message is the context request message. In this way, for different scenarios, different request messages are used to request the context, and this solution is flexibly and diversely applied to various communication scenarios, thereby improving utilization of this solution.

According to a third aspect, an embodiment of this application provides a communication method. The method may be performed by a third communication apparatus and a functional module or a chip in the third communication apparatus. For example, the method is performed by the third communication apparatus. The third communication apparatus is a communication apparatus that provides a service for a first communication apparatus. The method includes: The third communication apparatus receives a context from the first communication apparatus; and provides the service for the first communication apparatus based on the context.

Based on the method according to the third aspect, the third communication apparatus receives the context from the first communication apparatus, so that the third communication apparatus can successfully provide the service for the first communication apparatus. In addition, the third communication apparatus receives the context through the first communication apparatus, so that the third communication apparatus no longer needs to receive the context relayed by a core network apparatus or an inter-orbit satellite base station, thereby reducing a receiving delay of relaying the context, and reducing a handover delay.

In a possible design, in the communication method according to the third aspect, the first communication apparatus is a terminal apparatus, and the third communication apparatus is a second access network apparatus.

Based on this possible design, an actual communication scenario to which the communication method provided in this embodiment of this application is applicable is provided. For example, in a communication scenario in which the first communication apparatus is the terminal apparatus and the third communication apparatus is the second access network apparatus, the second access network apparatus receives the context from the terminal apparatus. The second access network apparatus is a communication apparatus that provides a service for the terminal apparatus. In this way, the second access network apparatus can receive the context through the terminal apparatus. In comparison with a case in which the second access network apparatus receives the context through the core network device or the inter-orbit satellite base station in a relay manner, the receiving delay of relaying the context is reduced, and the handover delay is reduced.

In a possible design, the first communication apparatus is a terminal apparatus, and the third communication apparatus is a second access network apparatus. That the third communication apparatus receives the context from the first communication apparatus includes: The second access network apparatus sends, to the terminal apparatus, first indication information indicating a first time-frequency resource, and receives the context from the terminal apparatus by using the first time-frequency resource.

Based on this possible design, in a communication scenario in which the first communication apparatus is the terminal apparatus and the third communication apparatus is the second access network apparatus, first indication information indicating the first time-frequency resource is provided. The second access network apparatus may receive the context from the terminal apparatus by using the first time-frequency resource indicated by the first indication information, thereby avoiding waste of transmission resources caused by blind reception of context by the second access network apparatus.

In a possible design, the first indication information is carried in a random access response, or the first indication information is carried in RRC signaling. Based on this possible design, in different communication scenarios, messages that may carry the first indication information are provided. Specifically, in a random access procedure of the terminal apparatus, the first indication information may be carried in the random access response; and in a process in which the terminal resumes a connected state from an inactive state, the first indication information may be carried in the RRC signaling. In this way, for different scenarios, different messages are used to carry the first indication information, and this solution is flexibly and diversely applied to various communication scenarios, thereby improving utilization of this solution.

In a possible design, the first communication apparatus is a terminal apparatus, and the third communication apparatus is a second access network apparatus. That the third communication apparatus receives the context from the first communication apparatus further includes: The second access network apparatus receives second indication information from the terminal. The second indication information indicates to send the context to the second access network apparatus.

Based on this possible design, in a communication scenario in which the first communication apparatus is the terminal apparatus and the third communication apparatus is the second access network apparatus, second indication information indicating to send the context to the second access network apparatus is provided, so that the second access network apparatus can receive the context from the terminal apparatus based on an indication of the second indication information, thereby achieving an objective of receiving the context from the terminal apparatus.

In a possible design, the second indication information is carried in a random access request; or the second indication information is carried in an RRC resume request message. For example, the second indication information may be carried in radio resource control resume request (RRC resume request) signaling specified in an existing wireless communication protocol.

Based on this possible design, in different communication scenarios, messages that may carry the second indication information are provided. Specifically, in a random access procedure of the terminal apparatus, the second indication information may be carried in the random access request; and in a process in which the terminal resumes a connected state from an inactive state, the second indication information may be carried in the RRC resume request message. In this way, for different scenarios, different messages are used to carry the second indication information, and this solution is flexibly and diversely applied to various communication scenarios, thereby improving utilization of this solution.

In a possible design, in the communication method according to the third aspect, the first communication apparatus is an access network apparatus, and the third communication apparatus is a second core network apparatus.

Based on this possible design, an actual communication scenario to which the communication method provided in this embodiment of this application is applicable is provided. For example, in a communication scenario in which the first communication apparatus is the access network apparatus and the third communication apparatus is the second core network apparatus, the second core network apparatus receives the context from the access network apparatus, and further provides a service for the access network apparatus based on the context. The second core network apparatus is a communication apparatus that provides the service for the access network apparatus. In this way, the second core network apparatus can obtain the context through the access network apparatus, to successfully provide the service for the access network apparatus. Further, the terminal apparatus served by the access network apparatus does not need to re-initiate, to the second core network apparatus, a process of applying for resource allocation by the second core network apparatus, thereby reducing resource overheads of the terminal apparatus.

In a possible design, the first communication apparatus is an access network apparatus, the third communication apparatus is a second core network apparatus, and a next generation NG interface is established between the access network apparatus and the second core network apparatus. That the third communication apparatus receives the context from the first communication apparatus includes: receiving next generation application NGAP signaling from the access network apparatus through the NG interface. The NGAP signaling carries the context.

Based on this possible design, in a scenario in which the first communication apparatus is the access network apparatus and the third communication apparatus is the second core network apparatus, new NGAP signaling that carries the context is provided, so that the second core network apparatus can receive the context from the access network apparatus by using the new NGAP signaling. In addition, the context is received by using the NGAP signaling specified in a standard, thereby reducing signaling overheads.

In a possible design, the communication method according to the third aspect further includes: The third communication apparatus sends update information to the first communication apparatus. The update information is used to update the context.

Based on this possible design, when updating the context, the third communication apparatus sends the update information for updating the context to the first communication apparatus, so that the first communication apparatus can obtain an updated context in the third communication apparatus by using the update information, and further, the third communication apparatus can successfully replace the second communication apparatus to provide the service for the first communication apparatus.

According to a fourth aspect, this application provides a first communication apparatus. The communication apparatus may be a terminal apparatus or a chip or a system on chip in the terminal apparatus, or may be a functional module that is in the terminal apparatus and that is configured to implement the method according to any one of the first aspect or the possible designs of the first aspect. The communication apparatus may implement functions performed by the terminal apparatus in the first aspect or the possible designs of the first aspect, and the functions may be implemented by hardware executing corresponding software. The hardware or the software includes one or more modules corresponding to the functions. For example, the communication apparatus may include a transceiver unit.

The transceiver unit is configured to obtain a context from a second communication apparatus, where the second communication apparatus is a communication apparatus that provides a service for the first communication apparatus, and the context is a context of a terminal apparatus served by the second communication apparatus.

The transceiver unit is further configured to send the context to a third communication apparatus, where the third communication apparatus is a communication apparatus that replaces the second communication apparatus to provide a service for the first communication apparatus.

Specifically, for an action performed by each unit of the communication apparatus, refer to the descriptions in any one of the first aspect or the possible designs of the first aspect. Details are not described.

According to a fifth aspect, this application provides a second communication apparatus. The communication apparatus is a communication apparatus that provides a service for a first communication apparatus. The second communication apparatus may be a network apparatus, a chip or a system on chip in the network apparatus, or may be a functional module that is in the network apparatus and that is configured to implement the method according to any one of the second aspect or the possible designs of the second aspect. The communication apparatus may implement functions performed by the network apparatus in the second aspect or the possible designs of the second aspect, and the functions may be implemented by hardware executing corresponding software. The hardware or the software includes one or more modules corresponding to the functions. For example, the communication apparatus may include a processing unit and a transceiver unit.

The processing unit is configured to obtain a context, where the context is a context of a terminal apparatus served by the second communication apparatus.

The transceiver unit is configured to send the context to the first communication apparatus.

Specifically, for an action performed by each unit of the communication apparatus, refer to the descriptions in any one of the second aspect or the possible designs of the second aspect. Details are not described.

According to a sixth aspect, this application provides a third communication apparatus. The communication apparatus is a communication apparatus that provides a service for a first communication apparatus. The third communication apparatus may be a network apparatus, a chip or a system on chip in the network apparatus, or may be a functional module that is in the network apparatus and that is configured to implement the method according to any one of the third aspect or the possible designs of the third aspect. The communication apparatus may implement functions performed by the network apparatus in the third aspect or the possible designs of the third aspect, and the functions may be implemented by hardware executing corresponding software. The hardware or the software includes one or more modules corresponding to the functions. For example, the communication apparatus may include a processing unit and a transceiver unit.

The processing unit is configured to receive a context from the first communication apparatus.

The transceiver unit is configured to provide the service for the first communication apparatus based on the context.

Specifically, for an action performed by each unit of the communication apparatus, refer to the descriptions in any one of the third aspect or the possible designs of the third aspect. Details are not described.

According to a seventh aspect, this application provides a communication apparatus. The communication apparatus may be a first communication apparatus, a second communication apparatus, a third communication apparatus, a chip or a system on chip in the first communication apparatus, a chip or a system on chip in the second communication apparatus, or a chip or a system on chip in the third communication apparatus. The communication apparatus may implement functions performed by the first communication apparatus in the first aspect or the possible designs of the first aspect, the communication apparatus may implement functions performed by the second communication apparatus in the second aspect or the possible designs of the second aspect, or the communication apparatus may implement functions performed by the third communication apparatus in the third aspect or the possible designs of the third aspect. The functions may be implemented by hardware. In a possible design, the communication apparatus includes a processor and a communication interface. The processor and the communication interface are configured to support the first communication apparatus in performing the communication method according to any one of the first aspect or the possible designs of the first aspect, the processor and the communication interface are configured to support the second communication apparatus in performing the communication method according to any one of the second aspect or the possible designs of the second aspect, or the processor and the communication interface are configured to support the third communication apparatus in performing the communication method according to any one of the third aspect or the possible designs of the third aspect. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the communication method according to any one of the first aspect or the possible designs of the first aspect, or the communication apparatus performs the communication method according to any one of the second aspect or the possible designs of the second aspect, or the communication apparatus performs the communication method according to any one of the third aspect or the possible designs of the third aspect.

According to an eighth aspect, this application provides a communication system. The communication system includes the first communication apparatus provided in the fourth aspect, the second communication apparatus provided in the fifth aspect, and the third communication apparatus provided in the sixth aspect; the communication system includes the first communication apparatus provided in the fourth aspect, the second communication apparatus provided in the fifth aspect, and the communication apparatus provided in the seventh aspect; the communication system includes the first communication apparatus provided in the fourth aspect, the communication apparatus provided in the seventh aspect, and the third communication apparatus provided in the sixth aspect; or the communication system includes the communication apparatus provided in the seventh aspect, the second communication apparatus provided in the fifth aspect, and the third communication apparatus provided in the sixth aspect.

According to a ninth aspect, this application provides a computer-readable storage medium. The computer-readable storage medium stores computer instructions. When the computer instructions are run on a computer, the computer is caused to perform the communication method according to any one of the first aspect or the possible designs of the first aspect; the computer is caused to perform the communication method according to any one of the second aspect or the possible designs of the second aspect; or the computer is caused to perform the communication method according to any one of the third aspect or the possible designs of the third aspect.

According to a tenth aspect, this application provides a computer program product. The computer program product includes computer instructions. When the computer instructions are run on a computer, the computer is caused to perform the communication method according to any one of the first aspect or the possible designs of the first aspect; the computer is caused to perform the communication method according to any one of the second aspect or the possible designs of the second aspect; or the computer is caused to perform the communication method according to any one of the third aspect or the possible designs of the third aspect.

### BRIEF DESCRIPTION OF DRAWINGS

FIG. 1 is an architectural diagram of a satellite communication network system;
FIG. 2 is a diagram of a communication system according to an embodiment of this application;
FIG. 3 is a diagram of a satellite communication system according to an embodiment of this application;
FIG. 4 is a schematic flowchart of a communication method according to an embodiment of this application;
FIG. 5A and FIG. 5B area schematic flowchart of a communication method according to an embodiment of this application;
FIG. 6A and FIG. 6B are a schematic flowchart of a communication method according to an embodiment of this application;
FIG. 7A and FIG. 7B are a schematic flowchart of a communication method according to an embodiment of this application;
FIG. 8 is a diagram of a structure of a first communication apparatus according to this application;
FIG. 9 is a diagram of a structure of a second communication apparatus according to this application;
FIG. 10 is a diagram of a structure of a third communication apparatus according to this application; and
FIG. 11 is a diagram of a structure of a communication apparatus according to this application.

### DESCRIPTION OF EMBODIMENTS

Before embodiments of this application are described, some technical terms in embodiments of this application are explained and described. It should be noted that the following explanations and descriptions are intended to facilitate understanding of embodiments of this application, and should not be construed as any limitation on the protection scope claimed in embodiments of this application.

With development of information technologies, more urgent requirements are imposed on efficiency, mobility, diversity, and the like of communication. Currently, a development focus in the communication system field is global mobile communication, and an important part of mobile communication is satellite communication. In some important fields, such as space communication and aeronautical communication, satellite communication plays an irreplaceable role. Satellite communication has characteristics such as a long communication distance, a large coverage area, and flexible networking. Satellite communication can provide services for both fixed terminals and various mobile terminals.

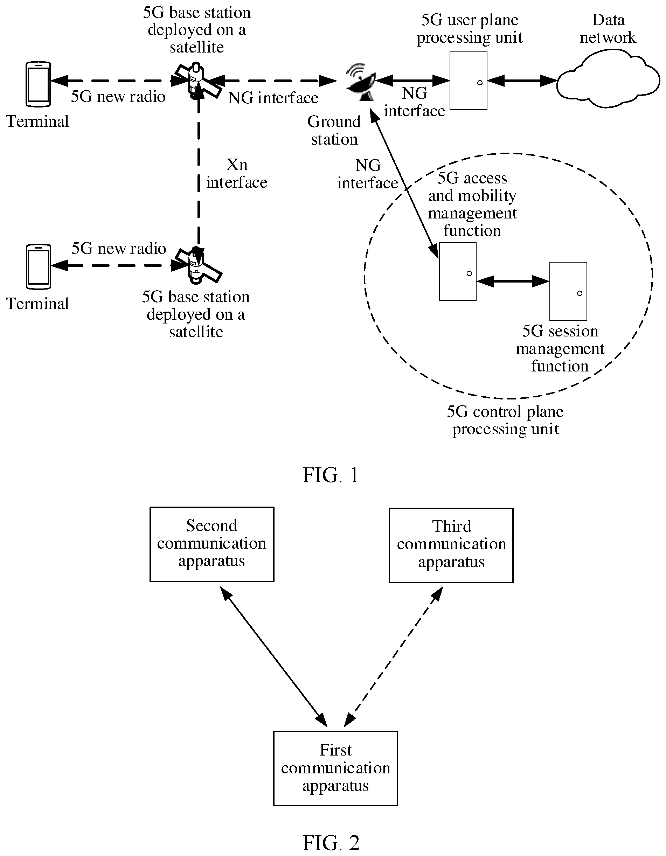

The 3rd Generation Partnership Project (3rd generation partnership project, 3GPP) standard organization has released a 5th generation mobile communication technology (5th generation, 5G) technical standard, and researches a space-ground integrated communication technology, which mainly integrates an existing 5G standard technology and a satellite communication technology, to satisfy full coverage worldwide. In addition, 3GPP members integrate the satellite communication technology and the 5G technology, and propose an architectural diagram of a satellite communication network system shown in FIG. 1. FIG. 1 shows an architecture of the satellite communication network system, including a terminal (user equipment, UE), 5G base stations deployed on satellites, a ground station, a 5G user plane processing unit, a 5G control plane processing unit, a data network, 5G new radio, an Xn interface, and a next generation (next generation, NG) interface. The 5G control plane processing unit includes a 5G access and mobility management function and a 5G session management function. As shown in FIG. 1, the UE is connected, through the 5G new radio, to the 5G base station deployed on the satellite, the 5G base station deployed on the satellite is connected to the ground station through the NG interface, the ground station is connected to the 5G user plane processing unit through the NG interface, and the ground station is connected to the 5G control plane processing unit through the NG interface. In addition, when there is an available radio link between the satellites, 5G base stations deployed on different satellites can exchange signaling and send user data between the base stations through the Xn interface.

In this application, a type of a base station deployed on the satellite is not limited, and the base station may be a 5G base station, a base station in a future evolved communication system, or the like. This application is described by using the 5G base station as an example. The 5G base station deployed on the satellite may alternatively be described as a satellite base station, a satellite access network device, a satellite access network apparatus, a satellite communication apparatus, or the like. This is not limited.

Cell handover means that when a terminal is in a connected state and maintains a data transmission service, the terminal moves from one cell to another cell, or an original serving cell (source cell) cannot continue to provide a service for the terminal due to reasons such as wireless transmission service load adjustment, activation operation and maintenance, and device faults. To ensure uninterrupted data transmission services and quality of service, a radio bearer system searches for a most appropriate cell (target cell) or a network to continue to provide uninterrupted services for the terminal, thereby implementing mobility management of seamless wireless network coverage.

In the architecture of the satellite communication network system shown in FIG. 1, cell handover includes intra-satellite cell handover and inter-satellite cell handover. Intra-satellite cell handover means that the terminal is handed over between the source cell and the target cell. The source cell and the target cell belong to a coverage area of a same satellite base station. In other words, the source cell and the target cell correspond to the same satellite base station. Inter-satellite cell handover means that the terminal is handed over between the source cell and the target cell. The source cell and the target cell belong to coverage areas of different satellite base stations. In other words, the source cell and the target cell correspond to the different satellite base stations. The satellite base station to which the source cell belongs may be referred to as a source satellite base station, and the satellite base station to which the target cell belongs may be referred to as a target satellite base station.

In the architecture of the satellite communication network system, the satellite base station is deployed on a satellite orbit. In a large-scale low earth orbit constellation, a satellite orbit may be ascending or descending, and the low earth orbit constellation refers to a type of artificial satellite constellation that operates at a height of less than 1000 km around the Earth. When a satellite moves from south to north along an orbit, the satellite is referred to an "orbit-ascending" satellite. When a satellite moves from north to south along an orbit, the satellite is referred to an "orbit-descending" satellite. A relative speed of movement between the orbit-ascending satellite and the orbit-descending satellite is extremely high. As a result, it is difficult to establish an available inter-satellite link between the orbit-ascending satellite and the orbit-descending satellite.

The inter-satellite link is a link used for direct communication between satellite base stations, and is also referred to as an intersatellite link or a cross link. The inter-satellite link may be a wireless interface or an optical interface. When the inter-satellite link is the wireless interface, the Xn interface in FIG. 1 may be referred to as an inter-satellite link.

For example, the terminal performs inter-satellite cell handover, and the source cell and the target cell belong to coverage areas of different orbit-ascending and orbit-descending satellite base stations, that is, the source cell and the target cell correspond to the orbit-ascending satellite base station and the orbit-descending satellite base station that are different. The source cell corresponds to the orbit-ascending satellite base station, and the target cell corresponds to the orbit-descending satellite base station; or the source cell corresponds to the orbit-descending satellite base station, and the target cell corresponds to the orbit-ascending satellite base station. In this case, because the source cell and the target cell correspond to the different orbit-ascending and orbit-descending satellite base stations, it is difficult to establish an available inter-satellite link between the source satellite base station and the target satellite base station. Consequently, signaling exchange and user data transmission cannot be completed between the source satellite base station and the target satellite base station through the Xn interface, and the terminal cannot perform an Xn interface-based inter-satellite cell handover. In the foregoing case, the terminal may perform an NG interface-based inter-satellite cell handover, or the terminal may perform a multi-hop Xn interface-based inter-satellite cell handover.

When the terminal performs NG interface-based inter-satellite cell handover, the source satellite base station needs to send, to a core network device through the NG interface, a context of the terminal required for inter-satellite cell handover in the source satellite base station, and then the core network device forwards the terminal context to the target satellite base station. This manner of forwarding the context of the terminal by the core network device causes a large transmission delay in inter-satellite cell handover. Especially, when the core network device is deployed on the ground, the transmission delay is further increased by satellite-to-ground transmission.

When the terminal performs multi-hop Xn interface-based inter-satellite cell handover, the source satellite base station needs to relay, to the target satellite base station through an inter-orbit satellite base station, a context of the terminal required for inter-satellite cell handover in the source satellite base station. There is an available Xn interface between the source satellite base station and the inter-orbit satellite base station, and there is an available Xn interface between the target satellite base station and the inter-orbit satellite base station. It is clear that, a large transmission delay also exists when the terminal performs multi-hop Xn interface-based inter-satellite cell handover, and transmission reliability is low.

To address the problem of excessive delay when a source communication apparatus relays a context to a target communication apparatus through a core network device or an inter-orbit satellite base station in scenarios where a communication apparatus (for example, an access network apparatus or a core network apparatus) that provides a service for a terminal apparatus is switched from the source communication apparatus to the target communication apparatus, this application provides a communication method. The method includes: A first communication apparatus obtains a context from a second communication apparatus that provides a service for the first communication apparatus, and sends the context to a third communication apparatus that replaces the second communication apparatus to provide a service for the first communication apparatus, where the context is a context of a terminal apparatus served by the second communication apparatus. For example, the first communication apparatus is a terminal, the second communication apparatus is a source satellite base station, and the third communication apparatus is a target satellite base station. When an inter-satellite link cannot be established between the source satellite base station and the target satellite base station, the source satellite base station may send a context of the terminal served by the source satellite base station to the terminal. After receiving the context of the terminal served by the source satellite base station, the terminal may send the context of the terminal served by the source satellite base station to the target satellite base station when communicating with the target satellite base station, without relaying the context of the terminal served by the source satellite base station to the target satellite base station through the core network device or the inter-orbit satellite base station, thereby reducing a transmission delay of relaying the context of the terminal, and reducing a handover delay.

The following describes the communication method provided in embodiments of this application with reference to the accompanying drawings of the specification.

The technical solutions in embodiments of this application may be applied to various communication systems. The communication system may be a 3rd generation partnership project (3rd generation partnership project, 3GPP) communication system, for example, a long term evolution (long term evolution, LTE) system, a 5th generation (5th generation, 5G) mobile communication system, a new radio (new radio, NR) system, a satellite communication system, or a new radio vehicle to everything (vehicle to everything, NR V2X) system, or may be applied to a system of hybrid networking of the LTE and the 5G, a device-to-device (device-to-device, D2D) communication system, a machine-to-machine (machine-to-machine, M2M) communication system, internet of things (Internet of Things, IoT), another next generation communication system, or a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable and low latency communication (ultra-reliable and low latency communication, URLLC), machine type communication (machine type communication, MTC), massive machine type communications (massive machine type communications, mMTC), D2D, V2X, and IoT. The technical solutions in embodiments of this application may be further applied to a long-distance communication scenario, for example, applied to a satellite communication scenario in which a distance between a terminal and a network apparatus continuously changes or to another long-distance communication scenario. This is not limited.

FIG. 2 is a diagram of a structure of a communication system according to an embodiment of this application. As shown in FIG. 2, the communication system may include a first communication apparatus, a second communication apparatus, and a third communication apparatus. The first communication apparatus in FIG. 2 may be a communication apparatus having a wireless communication function. The first communication apparatus may have a mobility characteristic. The first communication apparatus may communicate and/or exchange data with the second communication apparatus within a coverage area of the second communication apparatus, and receive a service provided by the second communication apparatus. The first communication apparatus may move from the coverage area/a service area of the second communication apparatus to a coverage area/service area of the third communication apparatus. The first communication apparatus may communicate and/or exchange data with the third communication apparatus within the coverage area of the third communication apparatus, and receive a service provided by the third communication apparatus.

In this application, the second communication apparatus is a communication apparatus that provides the service for the first communication apparatus. The third communication apparatus is a communication apparatus that replaces the second communication apparatus to provide the service for the first communication apparatus. The second communication apparatus may be referred to as a source communication apparatus, and the third communication apparatus may be referred to as a target communication apparatus. A direct communication link may be established between the second communication apparatus and the third communication apparatus, or there may be no direct communication link. This is not limited.

It may be understood that FIG. 2 is merely a diagram, and does not constitute a limitation on an applicable scenario of the technical solutions provided in this application. A person skilled in the art should understand that, in a specific implementation process, the communication system shown in FIG. 2 may alternatively include fewer apparatuses than those shown in FIG. 2, or the communication system shown in FIG. 2 may further include another apparatus. In addition, a quantity of apparatuses in the communication system shown in FIG. 2 may be determined based on a specific requirement. This is not limited. The following describes the apparatus in the system shown in FIG. 2.

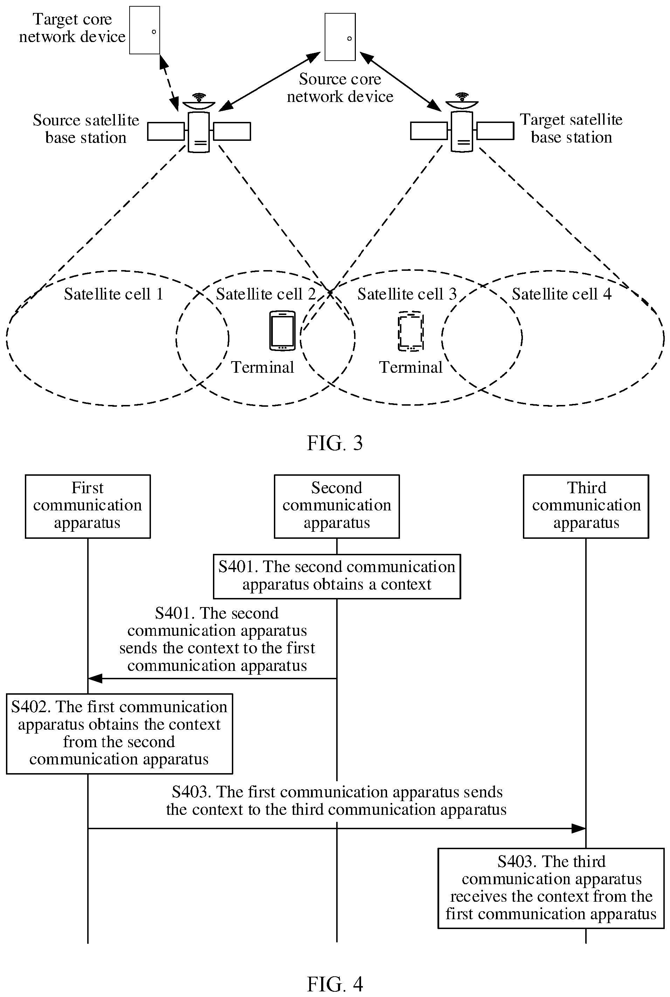

In this application, the communication system shown in FIG. 2 may be a satellite communication system, for example, a satellite communication system shown in FIG. 3. As shown in FIG. 3, the satellite communication system may include a terminal, a source satellite base station, a target satellite base station, a source core network device, and a target core network device. The terminal may be in a connected state or a deactivated state. When the terminal is in the connected state, connections are established between the terminal and the source satellite base station, and between the source satellite base station and the source core network device for the terminal, and the terminal may access a network at any time. When the terminal is in the deactivated state, no connection is established between the terminal and the source satellite base station, but a connection is established between the source satellite base station and the source core network device for the terminal. Therefore, the terminal in the deactivated state needs to resume the connected state from the deactivated state, to further access the network.

The source satellite base station is a communication apparatus that provides a service for the terminal. The source satellite base station includes a satellite cell 1 and a satellite cell 2, and the satellite cell 2 in the source satellite base station is a satellite cell that provides a service for the terminal. The satellite cell 1 and the satellite cell 2 are areas covered by the source satellite base station, and the source satellite base station may provide the service for the terminal within the satellite cell 1 and the satellite cell 2.

The target satellite base station is a communication apparatus that replaces the source satellite base station to provide a service for the terminal. The target satellite base station includes a satellite cell 3 and a satellite cell 4, and the satellite cell 3 in the target satellite base station is a satellite cell that replaces the satellite cell 3 to provide a service for the terminal. The satellite cell 3 and the satellite cell 4 are areas covered by the target satellite base station, and the target satellite base station may provide the service for the terminal in the satellite cell 3 and the satellite cell 4.

The source core network device is a communication apparatus that provides services for the source satellite base station and the target satellite base station.

The target core network device is a communication apparatus that replaces the source core network device to provide a service for the source satellite base station.

The satellite communication system is used as an example. The first communication apparatus in this application may be a terminal apparatus or an access network apparatus. When the first communication apparatus is the terminal apparatus, the second communication apparatus may be a first access network apparatus, and the third communication apparatus may be a second access network apparatus. The first access network apparatus is an access network apparatus that provides a service for the terminal apparatus, and the second access network apparatus is an access network apparatus that replaces the first access network apparatus to provide a service for the terminal apparatus. When the first communication apparatus is the access network apparatus, the second communication apparatus may be a first core network apparatus, and the third communication apparatus may be a second core network apparatus. The first core network apparatus is a core network apparatus that provides a service for the access network apparatus, and the second core network apparatus is a core network apparatus that replaces the first core network apparatus to provide a service for the access network apparatus.

The terminal apparatus in this application may be a terminal device (terminal equipment) or a functional module/chip in the terminal device, or may be user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in smart grid, a wireless terminal in smart city (smart city), a smart home, an in-vehicle terminal, or the like.

The access network apparatus in this application may be an access network device or a functional module/chip in the access network device, and is an apparatus in a radio access network (radio access network, RAN) for accessing a terminal to a wireless network. The RAN may be connected to a core network (which may be, for example, an LTE core network, or a 5G core network). The access network device may be a satellite base station (or a flight platform) in an NTN scenario, an evolved NodeB (evolved NodeB, eNB or eNodeB) in the LTE, or a base station in a 5G network or a future evolved public land mobile network (public land mobile network, PLMN), a broadband network gateway (broadband network gateway, BNG), an aggregation switch, or a non-3GPP access device. Alternatively, the access network apparatus in embodiments of this application may be a radio controller in a cloud radio access network (cloud radio access network, CRAN), or a transmission and reception point (transmission and reception point, TRP), or a device including the TRP. This is not specifically limited in embodiments of this application. Optionally, the base station in embodiments of this application may include base stations in various forms, for example, a macro base station, a micro base station (also referred to as a small cell), a relay station, or an access point. This is not specifically limited in embodiments of this application.

The access network apparatus in embodiments of this application may be carried on or deployed on a flight platform, for example, a low-altitude flight platform, a high-altitude flight platform, or a satellite. When the access network apparatus is carried on the flight platform, the access network apparatus moves synchronously with the flight platform.

The core network apparatus in this application may be a core network device or a functional module/chip in the core network device, for example, an access and mobility management function (access and mobility management function, AMF) or a functional module/chip in the AMF. The AMF is a central point responsible for interaction of most control plane functions, and is mainly used for registration management, connection management, access management, mobility management, security and access management, and various authorization related functions.

Optionally, each apparatus (for example, the first communication apparatus, the second communication apparatus, and the third communication apparatus) in FIG. 2 may also be referred to as a communication device, and may be a general-purpose apparatus or a dedicated apparatus. This is not specifically limited in embodiments of this application.

Optionally, a function related to each apparatus in FIG. 2 in this application may be implemented by one apparatus, or may be jointly implemented by a plurality of apparatuses, or may be implemented by one or more functional modules in one apparatus. This is not specifically limited in embodiments of this application. It may be understood that, the foregoing function may be a network element in a hardware apparatus, or may be a software function running on dedicated hardware, or a combination of hardware and software, or an instantiated virtualization function on a platform (for example, a cloud platform).

The following describes the communication method provided in embodiments of this application with reference to the communication system shown in FIG. 2. Actions, terms, and the like in the following embodiments may be mutually referenced. Names of messages exchanged between apparatuses, names of parameters in the messages, and the like in embodiments are merely examples, and other names may be used in specific implementation. For example, "corresponding" in the following embodiments may be replaced with "associating", and "sending" in the following embodiments may be replaced with "transmission".

FIG. 4 is a schematic flowchart of a communication method according to an embodiment of this application. As shown in FIG. 4, the method may include step S401 to step S403.

S401. A second communication apparatus obtains a context, and sends the context to a first communication apparatus.

The second communication apparatus may be a communication apparatus that provides a service for the first communication apparatus, and the second communication apparatus may be a communication apparatus corresponding to a cell in which a terminal is located. For example, the first communication apparatus may be the terminal in FIG. 3, and the second communication apparatus may be the source satellite base station in FIG. 3. For another example, the first communication apparatus may be the source satellite base station in FIG. 3, and the second communication apparatus may be the source core network device in FIG. 3.

The context is a context of a terminal apparatus served by the second communication apparatus, and the context of the terminal apparatus is terminal apparatus related information. The context may be used by the communication apparatus to serve the terminal apparatus.

In an example, the context includes a key context of the terminal apparatus and other information, and the other information may be information specified in an existing 3GPP protocol. Details are not described. The key context of the terminal apparatus is information used for secure context transmission. In different communication scenarios, the context may include different information. For example, in a scenario in which the terminal performs inter-satellite cell handover, the context includes information used by a target satellite base station to complete handover preparation, for example, terminal user security configuration (for example, an encryption algorithm) information, terminal air interface configuration information, and terminal user capability information. For another example, in a scenario in which the terminal in an inactive state resumes a connected state, the context includes information used by the terminal in the inactive state to access a target base station, for example, session information, security information (for example, an encryption algorithm), and mobility management information of the terminal.

In another example, the context may include information specified in an existing 3GPP protocol, but does not include a key context of the terminal apparatus. In this case, the key context of the terminal apparatus is generated and stored in a core network apparatus by the core network apparatus based on a geographical area in which the terminal apparatus is located. For example, the key context of the terminal apparatus may be stored in the core network apparatus in association with the geographical area. Subsequently, the third communication apparatus may obtain, from the core network apparatus based on the geographical area in which the terminal apparatus is located, the key context of the terminal apparatus corresponding to the geographical area in which the terminal apparatus is located, without obtaining the context through the first communication apparatus and obtaining the key context of the terminal from the context, to avoid transmission of the key context of the terminal apparatus through an air interface between the first communication apparatus and the third communication apparatus, thereby improving network access security of the terminal apparatus.

The context is stored in the second communication apparatus, for example, stored in a local cache (cache) of the second communication apparatus. That the second communication apparatus obtains the context may include: The second communication apparatus obtains the context from the local cache.

In an example, the second communication apparatus may actively obtain the context from the local cache.

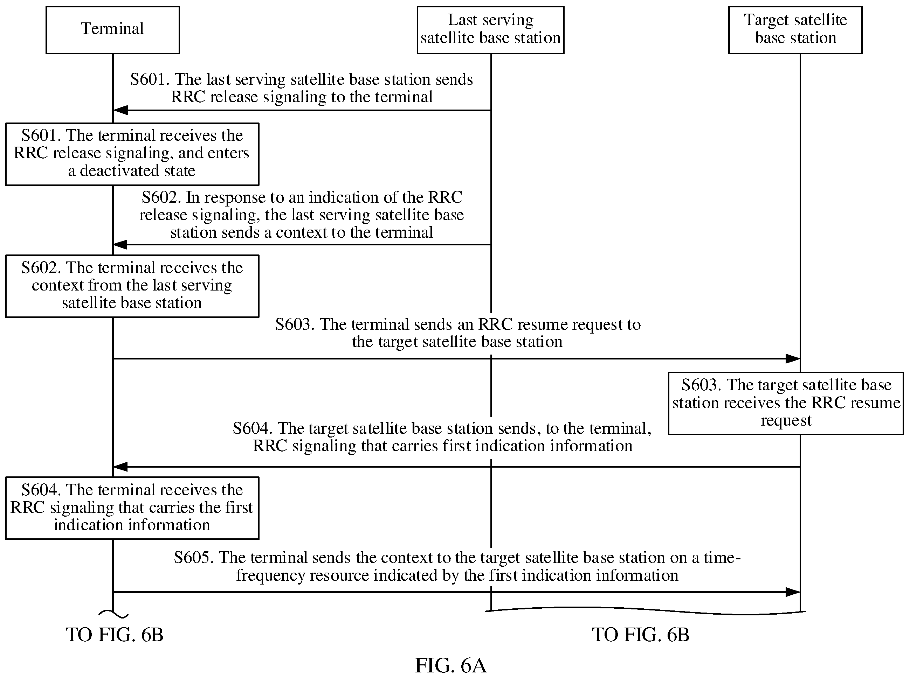

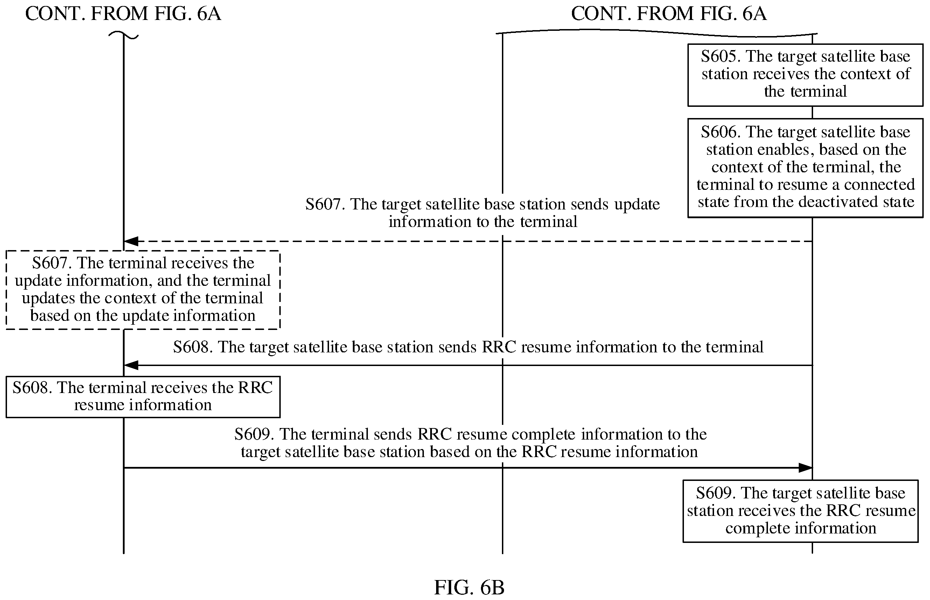

For example, after the second communication apparatus sends, to the first communication apparatus, radio resource control (radio resource control, RRC) release signaling indicating the first communication apparatus to receive the context, the second communication apparatus may obtain the context from the local cache, and send the context to the first communication apparatus. For a specific implementation, refer to descriptions in an embodiment corresponding to FIG. 6A and FIG. 6B.

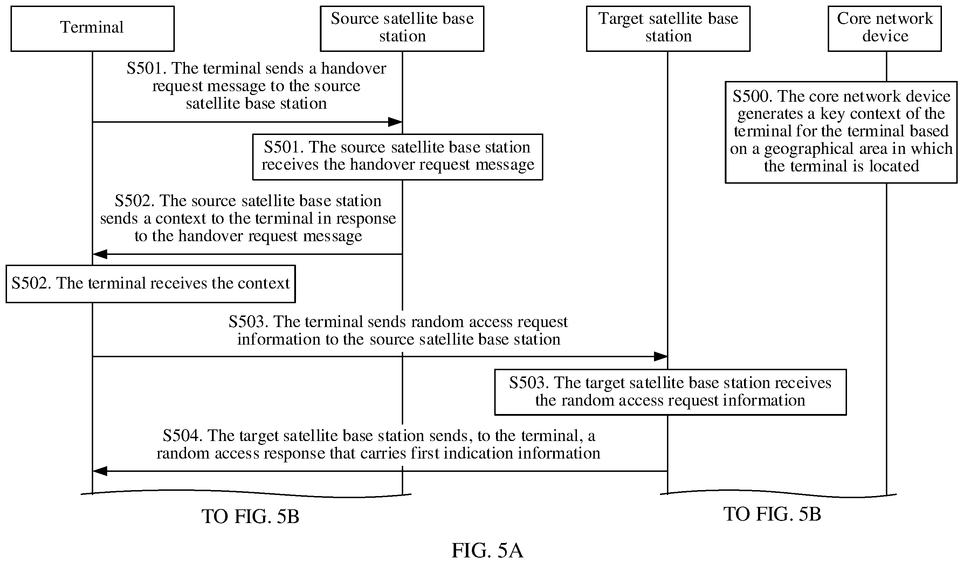

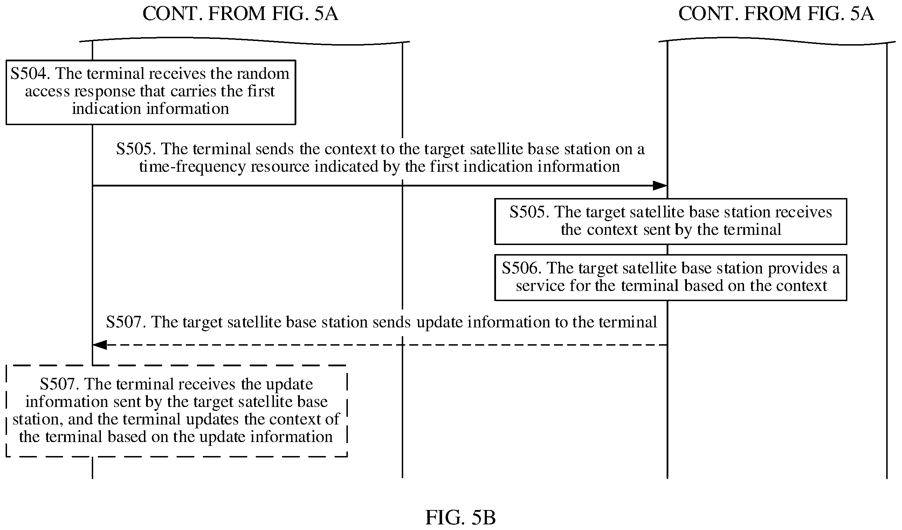

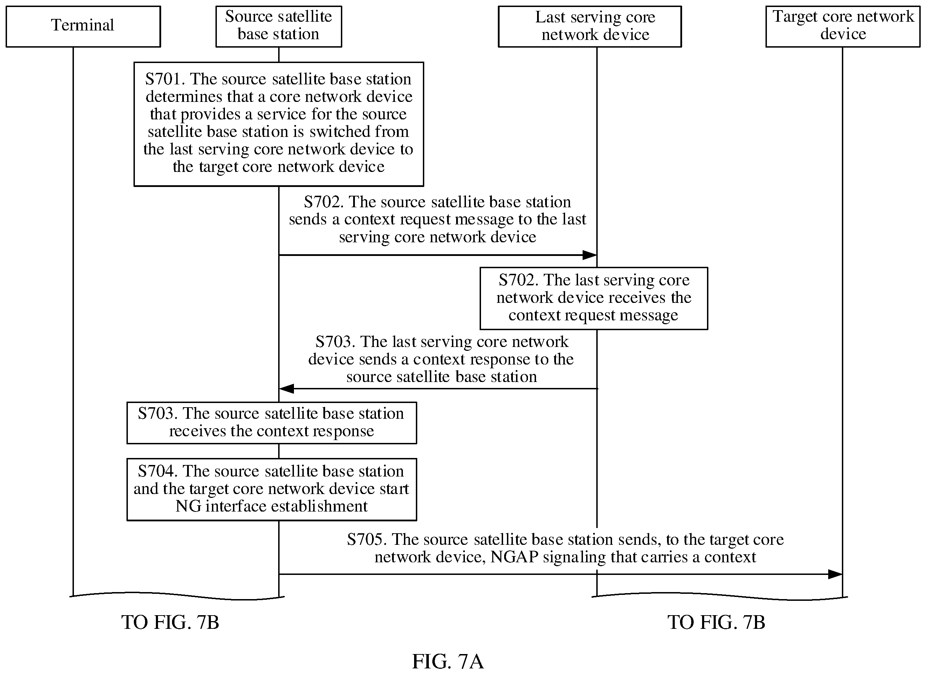

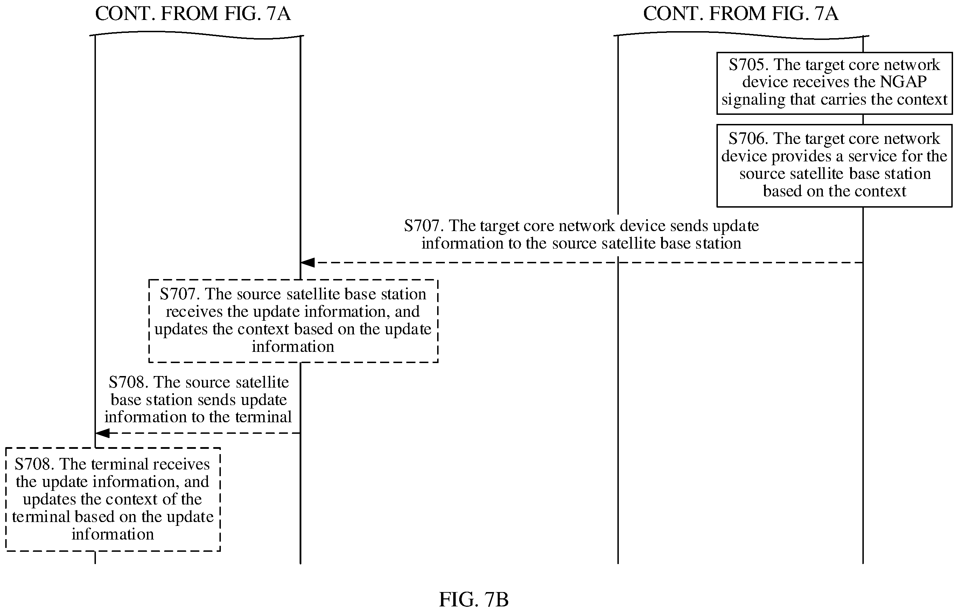

In another example, the second communication apparatus may receive, from the first communication apparatus, a first request message used to request the context. In response to the first request message, the second communication apparatus obtains the context from the local cache, and sends the context to the first communication apparatus. Specifically, for this implementation, refer to descriptions in an embodiment corresponding to FIG. 5A and FIG. 5B or FIG. 7A and FIG. 7B.

Optionally, when the first communication apparatus is a terminal apparatus, and the second communication apparatus is a first access network apparatus that provides a service for the terminal, the first request message may be a handover request message. When the first communication apparatus is an access network apparatus, and the second communication apparatus is a first core network apparatus that provides a service for the access network apparatus, the first request message may be a context request message. It should be understood that any message used to request the context in this application may be referred to as the first request message. A specific information form of the first request message is not limited in this application.

S402. The first communication apparatus obtains the context from the second communication apparatus.

That the first communication apparatus obtains the context from the second communication apparatus may be replaced with that the first communication apparatus receives the context from the second communication apparatus.

In an example, that the first communication apparatus obtains the context from the second communication apparatus may include: The first communication apparatus sends, to the second communication apparatus, the first request message used to request the context, and further receives the context from the second communication apparatus. For descriptions related to the first request message, refer to S401. Details are not described herein again. For a specific implementation, refer to the descriptions in the embodiment corresponding to FIG. 5A and FIG. 5B or FIG. 7A and FIG. 7B.

In another example, when the first communication apparatus is a terminal apparatus, and the second communication apparatus is a first access network apparatus that provides a service for the terminal apparatus, that the first communication apparatus obtains the context from the second communication apparatus may include: The first communication apparatus receives RRC release signaling from the second communication apparatus, and further receives the context from the second communication apparatus based on the RRC release signaling. The RRC release signaling indicates the first communication apparatus to receive the context. For a specific implementation, refer to the descriptions in the embodiment corresponding to FIG. 6A and FIG. 6B.

Further, optionally, when the first communication apparatus obtains the context of the second communication apparatus, the first communication apparatus may cache the context. In this way, when the first communication apparatus uses the context again, the first communication apparatus can quickly obtain the context locally, thereby increasing a response speed of obtaining the context by the first communication apparatus.

S403. The first communication apparatus sends the context to the third communication apparatus. Correspondingly, the third communication apparatus receives the context from the first communication apparatus.

The third communication apparatus is a communication apparatus that replaces the second communication apparatus to provide a service for the first communication apparatus. For example, the first communication apparatus may be the terminal in FIG. 3, the second communication apparatus may be the source satellite base station in FIG. 3, and the third communication apparatus may be the target satellite base station in FIG. 3. For another example, the first communication apparatus may be the source satellite base station in FIG. 3, the second communication apparatus may be the source core network device in FIG. 3, and the third communication apparatus may be the target core network device in FIG. 3.

There may be the following two examples in which the first communication apparatus sends the context to the third communication apparatus.

In an example, the first communication apparatus is a terminal apparatus, the second communication apparatus is a first access network apparatus, and the third communication apparatus is a second access network apparatus. In this case, that the first communication apparatus sends the context to the third communication apparatus may include:
The terminal apparatus receives, from the second access network apparatus, first indication information indicating a first time-frequency resource, and in response to the first indication information, the terminal apparatus sends the context to the second access network apparatus by using the first time-frequency resource. The first indication information may be carried in a random access response or carried in RRC signaling.

In this example, before the terminal apparatus sends the context to the second access network apparatus, the terminal apparatus may send second indication information to the second access network apparatus. The second indication information indicates to send the context to the second access network apparatus, and the second indication information may be carried in a random access request or carried in an RRC resume request message.

Specifically, for an implementation of this example, refer to the descriptions in the embodiment corresponding to FIG. 5A and FIG. 5B or FIG. 6A and FIG. 6B.

In another example, the first communication apparatus is an access network apparatus, the second communication apparatus is a first core network apparatus, and the third communication apparatus is a second core network apparatus. In this case, that the first communication apparatus sends the context to the third communication apparatus may include:
When an NG interface is established between the access network apparatus and the second core network apparatus, the access network apparatus sends, to the second core network apparatus through the NG interface, next generation access protocol (next generation access protocol, NGAP) signaling that carries the context. For the specific implementation, refer to the descriptions in the embodiment corresponding to FIG. 7A and FIG. 7B.

Further, optionally, after receiving the context from the first communication apparatus, the third communication apparatus provides the service for the first communication apparatus based on the context. Specifically, for the process, refer to conventional technologies, and details are not described herein.

Based on the communication method shown in FIG. 4, when the second communication apparatus is the communication apparatus that provides the service for the first communication apparatus, and the third communication apparatus replaces the second communication apparatus to provide the service for the first communication apparatus, after obtaining the context from the second communication apparatus, the first communication apparatus sends the context to the third communication apparatus. The context is a context of a terminal apparatus served by the second communication apparatus. In this way, when an inter-satellite link cannot be established between the second communication apparatus and the third communication apparatus, the second communication apparatus no longer needs to relay the context to the third communication apparatus through a core network device or an inter-orbit satellite base station, thereby reducing a transmission delay of relaying the context, and further reducing a handover delay of switching the first communication apparatus from the second communication apparatus to the third communication apparatus.

Optionally, when the third communication apparatus updates the context, the third communication apparatus may send, to the first communication apparatus based on an updated context, update information for updating the context. Correspondingly, the first communication apparatus receives the update information from the third communication apparatus, and updates a context of the first communication apparatus based on the update information. Optionally, the update information may include but is not limited to full update information of the context or incremental update information of the context. The full update information may be the updated context of the third communication apparatus, and the incremental update information may be different information between the updated context of the third communication apparatus and the context that is not updated.

In this way, the third communication apparatus may provide a service for the first communication apparatus by using the updated context. Correspondingly, the first communication apparatus may successfully access the third communication apparatus by using the received updated context of the third communication apparatus.

With reference to the satellite communication system shown in FIG. 3, the following uses an example in which a first communication apparatus is the terminal in FIG. 3, a second communication apparatus is the source satellite base station in FIG. 3, and a third communication apparatus is the target satellite base station in FIG. 3. The source satellite base station is a communication apparatus that provides a service for the terminal, and the target satellite base station is a communication apparatus that replaces the source satellite base station to provide a service for the terminal. The communication method shown in FIG. 4 is described with reference to FIG. 5A and FIG. 5B. FIG. 5A and FIG. 5B area schematic flowchart of a communication method according to an embodiment of this application. As shown in FIG. 5A and FIG. 5B, the method may include the following steps.

S500. A core network device generates a key context of a terminal for the terminal based on a geographical area in which the terminal is located.

That the core network device generates the key context of the terminal for the terminal based on the geographical area in which the terminal is located includes: The terminal and the core network device derive an area-specific key (area-specific key, Karea) based on a root key K of the terminal, and further derive another key based on the area-specific key. The root key is a basis of a cryptographic system, and is used to generate another key. The another key may include at least one type of the following keys: a key K_{gNB} used for secure transmission, a key K_{RRC} used for secure transmission of RRC signaling, a key K_{UP} used for secure transmission of a user plane service, and the like between an access network device and the core network device. It should be understood that the another key is generated based on the area-specific key. Therefore, other keys of a same type generated by the core network device based on a same area-specific key are the same. For example, K_{gNB}s generated by the core network device based on same Karea are the same, so that the terminal can use same K_{gNB} between different base stations in a same geographical area.

Further, optionally, the core network device may locally store the generated key context of the terminal, for example, store the generated key context of the terminal in a context of the terminal.

It should be understood that S500 is an optional step. For example, in response to a case in which the context does not include the key context of the terminal, the core network device may perform S500 to generate the key context of the terminal. In this way, after starting to cover the geographical area in which the terminal is located, a target satellite base station may obtain the key context of the terminal through an NG interface between the target satellite base station and the core network device, to avoid transmission of the key context of the terminal through an air interface between the terminal and the target satellite base station, thereby improving network access security of the terminal. When the context includes the key context of the terminal, S500 in which the core network device generates the key context of the terminal for the terminal based on the geographical area in which the terminal is located may not be performed, and the key context of the terminal is directly generated by using conventional technologies.

S501. The terminal sends a handover request message to a source satellite base station. Correspondingly, the source satellite base station receives the handover request message.

The handover request message may be used to request switch of a satellite base station that provides a service for the terminal, a serving cell of the terminal, or the like. In this application, a handover request may be further used to request a context. The handover request message may be handover request (handover request) signaling specified in a wireless communication protocol.

That the terminal sends the handover request message to the source satellite base station may include: When the source satellite base station cannot continue to provide a service for the terminal or signal quality provided by the source satellite base station for the terminal is excessively low, the terminal sends the handover request message to the source satellite base station, to request switch of the satellite base station that provides the service for the terminal, and request the context of the terminal.

S502. The source satellite base station sends the context to the terminal in response to the handover request message. Correspondingly, the terminal receives the context.

In this embodiment of this application, the context is a context of a terminal served by the source satellite base station.

Further, optionally, in response to the handover request message, the source satellite base station may further determine a candidate target satellite base station for the terminal, and send candidate target satellite base station related information to the terminal, for example, send an identifier of the candidate target satellite base station to the terminal. Specifically, there may be one or more candidate target satellite base stations. For a process in which the source satellite base station determines the candidate target satellite base station, refer to conventional technologies. Details are not described.

The context includes at least information required by the candidate target satellite base station to complete handover preparation, for example, user security configuration information, air interface configuration information, and user capability information. The user security configuration information is configuration information that ensures secure network access of a terminal user, for example, an encryption algorithm. The air interface configuration information is configuration information in wireless transmission between the terminal and a base station, for example, a time domain resource, a frequency domain resource, or a coding method used in each radio channel. The user capability information is a communication capability supported by the terminal, for example, a paging capability.

Specifically, when the source satellite base station determines one candidate target satellite base station for the terminal, the context may include information required by the candidate target satellite base station to complete handover preparation. When the source satellite base station determines a plurality of candidate target satellite base stations for the terminal, the context may include information required by the plurality of candidate target satellite base stations to complete handover preparation.

That the source satellite base station sends the context to the terminal may include: When the source satellite base station detects that there is no available inter-satellite link between the source satellite base station and the target satellite base station, or load of an Xn interface between the source satellite base station and the target satellite base station is heavy, and therefore, the source satellite base station determines that the source satellite base station cannot directly send the context to the target satellite base station, or cannot effectively send the context to the target satellite base station in a timely manner, the source satellite base station sends the context to the terminal, so that the terminal can send the context to the target satellite base station.

That the source satellite base station sends the context to the terminal may include: The source satellite base station obtains the context from a local cache of the source satellite base station, and sends the context to the terminal.

Further, optionally, the terminal receives the context, and caches the context locally, so that when the terminal uses the context again, the terminal can quickly obtain the context locally, thereby increasing a response speed of obtaining the context by the terminal.

S503. The terminal sends random access request information to the target satellite base station. Correspondingly, the target satellite base station receives the random access request information.

The target satellite base station may be a satellite base station that replaces the source satellite base station to provide a service for the terminal.

In an example, when the source satellite base station determines one candidate target satellite base station for the terminal, the terminal may determine the candidate target satellite base station as the target satellite base station that replaces the source satellite base station, determine the target satellite base station based on an identifier of the target satellite base station sent by the source satellite base station, and send the random access request information to the target satellite base station.

In another example, when the source satellite base station determines a plurality of candidate target satellite base stations for the terminal, the terminal may select, from the plurality of candidate satellite base stations, the target satellite base station that replaces the source satellite base station, determine the target satellite base station based on an identifier of the target satellite base station, and send the random access request information to the target satellite base station.

In this application, the random access request information may alternatively be described as a message 1 (message 1, MSG 1), a preamble, a random access preamble, or a random access preamble sequence. A random access request may be used to request to access the target satellite base station, and may further indicate the terminal to send the context to the target satellite base station.

In an example, the random access request may carry second indication information, and the second indication information may indicate the terminal to send the context of the terminal to the target satellite base station. In other words, it may be indicated, in a direct indication manner, to the target satellite base station that the terminal may send the context of the terminal to the target satellite base station.

In another example, when sending the random access request, the terminal selects a predefined preamble to initiate random access (random access, RA), and/or when sending the random access request, the terminal sends a preamble on a predefined time-frequency resource. The predefined preamble and/or the predefined time-frequency resource may indicate the terminal to send the context to the target satellite base station. In other words, it may be indicated, in an implicit indication manner, to the target satellite base station that the terminal may send the context to the target satellite base station.

For example, a preamble set includes a preamble 1 to a preamble 3, and the preamble 2 is predefined as indicating the terminal to send the context to the target satellite base station. In this case, if the terminal sends, to the target satellite base station, a random access request that carries the preamble 2, the terminal is indicated to send the context to the target satellite base station. Otherwise, if the terminal sends, to the target satellite base station, a random access request that carries the preamble 1 or the preamble 3, the terminal is indicated not to send the context to the target satellite.

S504. The target satellite base station sends, to the terminal, a random access response that carries first indication information. Correspondingly, the terminal receives the random access response that carries the first indication information.

The random access response (random access response, RAR) is used to respond to the random access request for accessing a network, and may also be referred to as a message 2 (message 2, MSG 2). The random access response may carry the first indication information, and the first indication information may indicate the target satellite base station to allocate an available time-frequency resource to the terminal.

For example, the terminal sends the predefined preamble to the target satellite base station when sending the random access request. The predefined preamble indicates that a purpose of initiating random access by the terminal this time includes context transmission. Correspondingly, after receiving and successfully parsing the predefined preamble, the target satellite base station allocates an available time-frequency resource 1 to the terminal, and further sends, to the terminal, the random access response that carries the first indication information. The first indication information indicates the available time-frequency resource 1 allocated by the target satellite base station to the terminal.

Optionally, to increase a success rate of random access by the terminal to the target satellite base station, the following designs may be provided.
(1) The target satellite base station indicates, in a system message, a dedicated contention-based random access resource and a new cell-radio network temporary identifier (cell-radio network temporary identifier, C-RNTI) paired with the dedicated contention-based random access resource. The system message is a message sent by a base station, and includes information required for terminal initialization and information related to some other functions/characteristics. The C-RNTI is a dynamic identifier allocated by the base station to a terminal, and uniquely identifies a terminal on an air interface of a cell. In this way, the terminal may initiate random access to the target satellite base station on the dedicated contention-based random access resource indicated by the system message, and no resource contention or resource conflict occurs between the terminal and another terminal that initiates random access to the target satellite base station, thereby increasing a success rate of random access by the terminal to the target satellite base station.
   For example, the target satellite base station sends the system message to a terminal 1 in a broadcast manner. The system message indicates that a dedicated random access resource allocated by the target satellite base station to the terminal 1 is a resource 1 and a C-RNTI_1. Further, the terminal 1 initiates random access to the target satellite base station on the resource 1 by using the C-RNTI_1.
(2) The source satellite base station performs scheduling to change a random access order of terminals, so that the terminals are switched to initiate contention-free random access to the target satellite base station. The contention-free random access means that the terminal initiates random access to the base station by using a dedicated random access preamble allocated by the base station to the terminal. In this case, a probability that the terminal successfully accesses a network is high.

For example, the source satellite base station is a communication device that provides services for the terminal 1 and a terminal 2, and a random access order initially allocated by the source satellite base station is such that the terminal 1 precedes the terminal 2. However, the source satellite base station cannot continue to provide a communication service for the terminal 2 due to movement. Therefore, the target satellite base station needs to replace the source satellite base station to provide a service for the terminal 2. Therefore, the source satellite base station performs scheduling to switch a random access order of the terminal 1 and the terminal 2, that is, the source satellite base station configures a random access order such that the terminal 2 precedes the terminal 1, so that an occasion on which the terminal 2 initiates random access to the target satellite base station does not conflict with an occasion on which the terminal 1 initiates random access to the target satellite base station. In this way, the terminal 2 initiates contention-free random access to the target satellite base station.

S505. The terminal sends the context to the target satellite base station on the time-frequency resource indicated by the first indication information. Correspondingly, the target satellite base station receives the context sent by the terminal.

For descriptions related to the first indication information and the random access response that carries the first indication information, refer to S504. For context related descriptions, refer to S502. Details are not described herein again.

For example, the time-frequency resource indicated by the first indication information in the random access response received by the terminal is the time-frequency resource 1, and the context includes security configuration information, air interface configuration information, and the like of the terminal. Further, the terminal sends the context to the target satellite base station on the time-frequency resource 1.

S506. The target satellite base station provides a service for the terminal based on the context.

Specifically, after receiving the context, the target satellite base station provides the service for the terminal based on the context, so that the target satellite base station successfully replaces the source satellite base station to provide the service for the terminal. Further, after the target satellite base station successfully replaces the source satellite base station to provide the service for the terminal, the terminal completes handover from the source satellite base station to the target satellite base station, and the terminal may send a handover confirm (handover confirm) message to the source satellite base station, so that the source satellite base station can release the context, thereby saving resources of the source satellite base station.

Optionally, when the context does not include the key context of the terminal, and the key context of the terminal is generated by the core network device based on the geographical area in which the terminal is located, after receiving the context sent by the terminal, the target satellite base station may obtain the key context of the terminal through the NG interface between the target satellite base station and the core network device, so that the terminal and the target satellite base station can perform secure data transmission based on the key context of the terminal.

Further, optionally, when the target satellite base station updates the context, for example, the target satellite base station has a more suitable new radio parameter that may be configured for the terminal, S507 is performed. In this case, update information sent by the target satellite base station to the terminal includes the new radio parameter allocated by the target satellite base station to the terminal. When the target satellite base station does not update the context, for example, all configuration information in the context received by the target satellite base station is applicable to the target satellite base station, S507 is not performed.

S507. The target satellite base station sends the update information to the terminal. Correspondingly, the terminal receives the update information sent by the target satellite base station, and the terminal updates the context in the terminal based on the update information.

The update information is used to update the context, and the update information may include an updated context of the target satellite base station, or may include different information between the updated context of the target satellite base station and the context that is not updated.

Based on the communication method shown in FIG. 5A and FIG. 5B, when the target satellite base station replaces the source satellite base station to provide a service for the terminal, and there is no available inter-satellite link (for example, no Xn interface) between the source satellite base station and the target satellite base station, the context of the terminal served by the source satellite base station is sent by the terminal to the target satellite base station, without relaying the context of the terminal served by the source satellite base station through the core network device or another inter-orbit satellite base station, thereby reducing a transmission delay of relaying the context of the terminal served by the source satellite base station, and further reducing a handover delay of switching the terminal from the source satellite base station to the target satellite base station. In addition, a design in which the core network device generates the key context of the terminal for the terminal based on the geographical area in which the terminal is located is provided, so that the target satellite base station can obtain the key context of the terminal from the core network device in advance based on the geographical area in which the terminal is located, thereby avoiding transmission of the key context of the terminal through an open air interface, and achieving an objective of secure transmission of the key context of the terminal.

With reference to the satellite communication system shown in FIG. 3, the following uses an example in which a first communication apparatus is the terminal in FIG. 3, a second communication apparatus is the source satellite base station in FIG. 3, and a third communication apparatus is the target satellite base station in FIG. 3. The source satellite base station may also be referred to as a last serving satellite base station (last serving gNB), and the target satellite base station replaces the last serving satellite base station to provide a service for the terminal. The communication method shown in FIG. 4 is described with reference to FIG. 6. FIG. 6A and FIG. 6B are a schematic flowchart of a communication method according to an embodiment of this application. As shown in FIG. 6A and FIG. 6B, the method may include the following steps.

S601. A last serving satellite base station sends RRC release signaling to a terminal. Correspondingly, the terminal receives the RRC release signaling, and enters a deactivated state.

The RRC release signaling (for example, RRC release with DL scheduling) is used to perform operations such as triggering the terminal to enter the deactivated state from a connected state. In this application, the RRC release signaling may further indicate the terminal to receive a context from the last serving satellite base station. In this embodiment of this application, the context is a context of a terminal served by the last serving satellite base station. The connected state means that connections are established between the terminal and the base station, and between the base station and a core network for the terminal, and data transmission can be performed at any time. In this state, no delay is generated during connection establishment, and therefore a delay is the shortest. The deactivated state means that no connection is established between the terminal and the base station, but a connection is established between the base station and the core network for the terminal. When data needs to be sent to the terminal, the base station delivers a paging message. After receiving the paging message, the terminal quickly establishes a connection to the base station (which is 10 ms fast resumption). In this way, the terminal resumes the connected state from the deactivated state.

In an example, that the last serving satellite base station sends the RRC release signaling to the terminal may include: The last serving satellite base station sends, to the terminal, the RRC release signaling that carries a downlink scheduling resource. The downlink scheduling resource is a time-frequency resource that is allocated by the last serving satellite base station to the terminal and that is used for context transmission.

In another example, that the last serving satellite base station sends the RRC release signaling to the terminal may include: The last serving satellite base station sends, to the terminal, the RRC release signaling that carries downlink scheduling resource indication information. The downlink scheduling resource indication information indicates a time-frequency resource for monitoring downlink control information (downlink control information, DCI). The DCI is used to schedule the terminal to receive the context from the last serving satellite base station.

S602. In response to an indication of the RRC release signaling, the last serving satellite base station sends the context to the terminal. Correspondingly, the terminal receives the context from the last serving satellite base station.

That the last serving satellite base station sends the context to the terminal includes: The last serving satellite base station sends the context to the terminal on the downlink scheduling resource. The downlink scheduling resource is a time-frequency resource that is allocated by the last serving satellite base station to the terminal and that is used for transmission of the context in the last serving satellite base station.

The context includes a session parameter, a security parameter, a mobility management parameter, and the like of the terminal. The session parameter is a parameter of a data transmission channel between the terminal and a data network. The security parameter is a parameter used to ensure secure network access of a terminal user. The mobility management parameter is a parameter that ensures a continuous communication service of a mobile terminal.

Optionally, after sending the context to the terminal on the downlink scheduling resource, the last serving satellite base station no longer continues to provide a service for the terminal, and releases the context, thereby saving resources of the last serving satellite base station. For example, the last serving satellite base station triggers the terminal to enter the deactivated state from the connected state, and a communication apparatus that provides a service for the terminal that resumes the connected state from the deactivated state is no longer the last serving satellite base station. Therefore, to save resources of the last serving satellite base station, the last serving satellite base station releases the context after sending the context.

Further, optionally, when the context does not include a key context of the terminal, and the key context of the terminal is generated by a core network device based on a geographical area in which the terminal is located, the last serving satellite base station sends the context in the last serving satellite base station on the downlink scheduling resource. Further, the last serving satellite base station sends the key context of the terminal to the core network device (for example, an AMF network element) in the geographical area in which the terminal is located. The key context of the terminal is used for secure context transmission. Specifically, the key context of the terminal is generated by the core network device based on the geographical area in which the terminal is located. For details, refer to the foregoing step S500. Details are not described herein again.

Further, optionally, the terminal receives the context from the last serving satellite base station, and caches the context locally, so that when the terminal uses the context again, the terminal can quickly obtain the context locally, thereby increasing a response speed of obtaining the context by the terminal.

S603. The terminal sends an RRC resume request to the target satellite base station. Correspondingly, the target satellite base station receives the RRC resume request.

The target satellite base station is a satellite base station that replaces the last serving satellite base station to provide a service for the terminal. The target satellite base station may also be understood as a satellite base station that enables the terminal in the deactivated state to resume the connected state from the deactivated state.

In this application, the RRC resume request may be used to request to resume the connected state of the terminal from the deactivated state, and may further indicate the terminal to send the context to the target satellite base station, that is, a purpose of initiating the RRC resume request by the terminal this time is to indicate the target satellite base station that the terminal may send the context to the target satellite base station.

In an example, the RRC resume request carries second indication information, and the second indication information indicates the terminal to send the context to the target satellite base station.

For example, the RRC resume request is radio resource control request (RRC resume request) signaling specified in a wireless communication protocol, and the terminal sends, to the target satellite base station, the RRC resume request signaling that carries the second indication information.

S604. The target satellite base station sends, to the terminal, RRC signaling that carries first indication information. Correspondingly, the terminal receives the RRC signaling that carries the first indication information.

The RRC signaling is used to send radio resource control related information, for example, send handover related information. The RRC signaling may carry the first indication information, and the first indication information may indicate the target satellite base station to allocate an available time-frequency resource to the terminal.

For example, the RRC resume request is an RRC resume request. The terminal sends, to the target satellite base station, the RRC resume request that carries the second indication information, and the second indication information indicates the terminal to send the context to the target satellite base station. Correspondingly, the target satellite base station receives the RRC resume request, and allocates an available time-frequency resource 1 to the terminal. Further, the target satellite base station sends, to the terminal, an uplink context grant (UL grant for UE context) that carries the first indication information, and the first indication information indicates the time-frequency resource 1 allocated by the target satellite base station to the terminal.

S605. The terminal sends the context to the target satellite base station on the time-frequency resource indicated by the first indication information. Correspondingly, the target satellite base station receives the context.

For descriptions related to the first indication information and the RRC signaling that carries the first indication information, refer to S604. For context related descriptions, refer to S602. Details are not described herein again.

For example, it is assumed that the RRC signaling that is sent by the target satellite base station to the terminal and that carries the first indication information is UL grant for UE context signaling, and the time-frequency resource indicated by the first indication information is the time-frequency resource 1. Correspondingly, the terminal receives the UL grant for UE context signaling that carries the first indication information, and further, the terminal sends the context to the target satellite base station on the time-frequency resource 1.

S606. The target satellite base station enables, based on the context, the terminal to resume the connected state from the deactivated state.

Specifically, the target satellite base station receives the context sent by the terminal, and reconfigures a local parameter, so that the target satellite base station can provide a service for the terminal. Correspondingly, the terminal resumes the connected state from the deactivated state.

Optionally, when the context does not include the key context of the terminal, and the key context of the terminal is generated by the core network apparatus based on the geographical area in which the terminal is located, after receiving the context sent by the terminal, the target satellite base station may obtain the key context of the terminal through an NG interface between the target satellite base station and the core network apparatus, so that the terminal and the target satellite base station can perform secure data transmission based on the key context of the terminal.

S607. The target satellite base station sends update information to the terminal. Correspondingly, the terminal receives the update information, and the terminal updates the context in the terminal based on the update information.

For descriptions related to S607, refer to descriptions related to S507. Details are not described herein again.

S608. The target satellite base station sends RRC resume information to the terminal. Correspondingly, the terminal receives the RRC resume information.

S609. The terminal sends RRC resume complete information to the target satellite base station based on the RRC resume information. Correspondingly, the target satellite base station receives the RRC resume complete information.

For detailed steps of S608 and S609, refer to an existing communication protocol, for example, TS38.331.5.3.13.1.

Based on the communication method shown in FIG. 6A and FIG. 6B, when the last serving satellite base station provides a service for the terminal, and the target satellite base station replaces the last serving satellite base station to provide a service for the terminal, in a process in which the terminal resumes the connected state from the deactivated state, the target satellite base station no longer needs to obtain the context in the last serving satellite base station from an anchor satellite base station. This reduces a transmission delay of relaying the context, and reduces complexity of context maintenance by a network device, to further reduce a delay that exists when the terminal in the deactivated state resumes the connected state from the deactivated state.

With reference to FIG. 3, the following uses an example in which a first communication apparatus is the source satellite base station in FIG. 3, a second communication apparatus is the source core network device in FIG. 3, and a third communication apparatus is the target core network device. The source core network device may also be referred to as a last serving core network device. The target core network device is a communication apparatus that replaces the last serving core network device to provide a service for the source satellite base station. The communication method shown in FIG. 4 is described with reference to FIG. 7A and FIG. 7B. FIG. 7A and FIG. 7B are a schematic flowchart of a communication method according to an embodiment of this application. As shown in FIG. 7A and FIG. 7B, the method may include the following steps.

S701. A source satellite base station determines that a core network device that provides a service for the source satellite base station is switched from a last serving core network device to a target core network device.

The source satellite base station is a satellite base station that provides a service for a terminal. For example, the source satellite base station in FIG. 3 is a satellite base station that provides a service for the terminal. The last serving core network device is a core network device that provides services for the source satellite base station and the terminal served by the source satellite base station. The target core network device is a core network device that replaces the last serving core network device to provide services for the source satellite base station and the terminal served by the source satellite base station.

Specifically, the source satellite base station determines, based on a relative position relationship between the source satellite base station and the last serving core network device, that the core network device that provides a service for the source satellite base station is switched from the last serving core network device to the target core network device.

S702. The source satellite base station sends a context request message to the last serving core network device. Correspondingly, the last serving core network device receives the context request message.

The context request message is used to request a context. In this embodiment of this application, the context is a context of a terminal served by the last serving core network device. The context request message is NGAP signaling, and the NGAP signaling may carry an NG interface terminal identifier. The NG interface terminal identifier is used to identify a terminal.

Specifically, the source satellite base station sends the context request message to the last serving core network device through an NG interface. The context request message carries an NG interface terminal identifier (for example, an NG interface radio access network side user identifier (a RAN UE NGAP ID) or an NG interface access and mobility management function side user identifier (an AMF UE NGAP ID)) of a terminal in a connected state served by the source satellite base station.

For example, it is assumed that the context request message is NGAP signaling of a UE context retrieve request. The source satellite base station sends the NGAP signaling of the UE context retrieve request to the last serving core network device through the NG interface. The NGAP signaling carries an AMF UE NGAP ID of a terminal 1 in a connected state served by the source satellite base station. The AMF UE NGAP ID is a unique identifier of the terminal on the NG interface of an AMF network element. Correspondingly, the source core network device receives the NGAP signaling of the UE context retrieve request, where the NGAP signaling carries the AMF UE NGAP ID of the terminal 1 in the connected state served by the source satellite base station.

S703. The last serving core network device sends a context response to the source satellite base station. Correspondingly, the source satellite base station receives the context response.

The context response is used to respond to the context request message. The context response carries the context of the terminal indicated by the NG interface terminal identifier. The context includes a terminal identifier, a security parameter, a mobility management parameter, and the like. The terminal identifier is information for identifying the terminal. The security parameter is a parameter for secure context transmission of the terminal. The mobility management parameter is a parameter required by the terminal to perform a mobility management operation, for example, an air interface configuration parameter of the terminal in cell handover of the terminal.

Optionally, after sending the context response to the source satellite base station, the last serving core network apparatus may release the context of the terminal indicated by the NG interface terminal identifier, thereby saving resources of the last serving core network device.

For example, it is assumed that the context request message is the NGAP signaling of the UE context retrieve request, and the context response is NGAP signaling of a UE context response. The source satellite base station sends the NGAP signaling of the UE context retrieve request to the last serving core network device through the NG interface, where the NGAP signaling carries the AMF UE NGAP ID of the terminal 1 in the connected state served by the source satellite base station. The AMF UE NGAP ID is the unique identifier of the terminal on the NG interface of the AMF network element. Correspondingly, the source core network device receives the NGAP signaling of the UE context retrieve request, and further, and the source core network device sends the NGAP signaling of the UE context response to the source satellite base station. The NGAP signaling of the UE context response carries the context of the terminal identified by the AMF UE NGAP ID.

S704. The source satellite base station and the target core network device start NG interface establishment.

The NG interface is an interface for data exchange between the source satellite base station and the target core network device. For a process in which the source satellite base station and the target core network device start NG interface establishment, refer to conventional technologies. Details are not described.

Optionally, the source satellite base station receives the context in the context response, and further caches the context locally, so that when the source satellite base station uses the context again, the source satellite base station can quickly obtain the context locally, thereby increasing a response speed of obtaining the context by the source satellite base station.

S705. The source satellite base station sends, to the target core network device, NGAP signaling that carries the context. Correspondingly, the target core network device receives the NGAP signaling that carries the context.

The NGAP signaling is information, in a 5G network, used by an access network device to communicate with an AMF network element in a core network device. In this application, the NGAP signaling carries the context.

For example, an available NG interface is established between the source satellite base station and the target core network device, and the source satellite base station sends NGAP signaling of an upload UE context to the target core network device through the NG interface. The NGAP signaling carries the context.

S706. The target core network device provides a service for the source satellite base station based on the context.

Specifically, after receiving the signaling that carries the context of the terminal, the target core network device provides, based on the context of the terminal, services for the source satellite base station and the terminal served by the source satellite base station, so that the target core network device successfully replaces the last serving core network device to provide the services for the source satellite base station and the terminal served by the source satellite base station.

Further, optionally, when the target core network device updates the context, for example, when the target core network device allocates a new NG interface identifier (a RAN UE NGAP ID or an AMF UE NGAP ID) to the terminal, S707 is performed. In this case, update information sent by the target core network device to the source satellite base station includes the new NG interface identifier allocated by the target core network device to the terminal. When the target core network device does not update the context of the terminal, for example, all configuration information in the context received by the target core network device is applicable to the target core network device, S707 is not performed.

S707. The target core network device sends the update information to the source satellite base station. Correspondingly, the source satellite base station receives the update information, and updates the context based on the update information.

The update information is used to update the context, and the update information may include an updated context of the target core network device, or may include different information between the updated context of the terminal of the target core network device and the context of the terminal that is not updated.

S708. The source satellite base station sends update information to the terminal. Correspondingly, the terminal receives the update information, and updates the context in the terminal based on updated update information.

Based on the communication method shown in FIG. 7A and FIG. 7B, when the target core network device replaces the last serving core network device to provide the service for the source satellite base station, and there is no available interface between the last serving core network device and the target core network device, the source satellite base station may relay the context of the terminal served by the last serving core network device to the target core network device, so that the target core network device can successfully replace the last serving core network device to provide the service for the source satellite base station, thereby reducing overheads of re-initiating application for a core network device parameter by the terminal, and further reducing a handover delay of switching the source satellite base station from the last serving core network device to the target core network device.

The foregoing mainly describes the solutions provided in embodiments of this application from a perspective of interaction between apparatuses. It may be understood that, to implement the foregoing functions, the apparatuses, such as the first communication apparatus (for example, the terminal or the source satellite base station), the second communication apparatus (for example, the target satellite base station or the source core network device), and the third communication apparatus (for example, the target satellite base station or the target core network device), include corresponding hardware structures and/or software modules for executing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of this application.

In embodiments of this application, the first communication apparatus, the second communication apparatus, the third communication apparatus, and the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used.

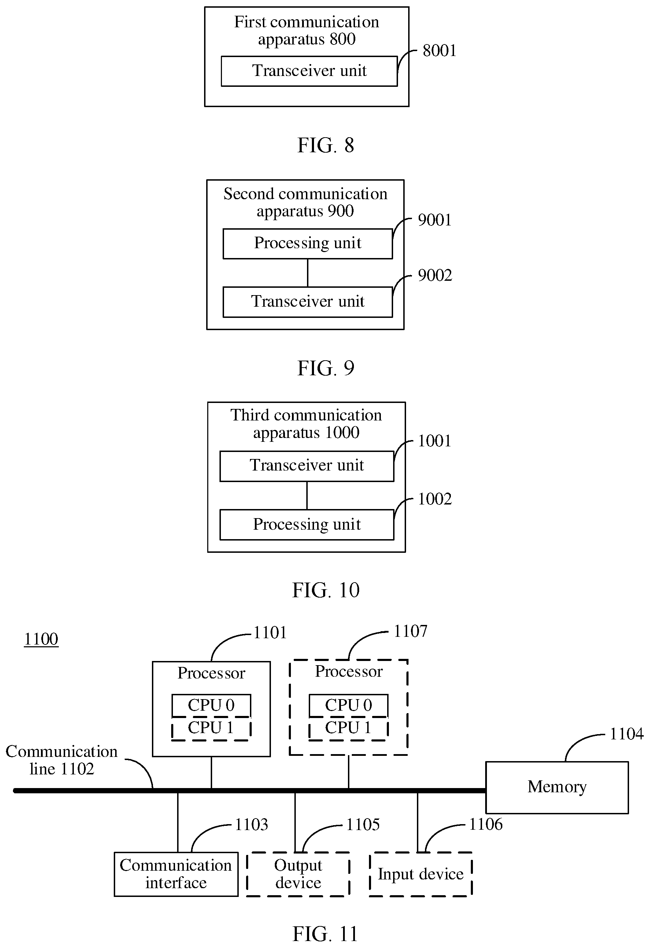

FIG. 8 is a diagram of a structure of a first communication apparatus 800. The first communication apparatus 800 may be configured to perform functions of the first communication apparatus in the foregoing embodiments. In an implementation, the first communication apparatus 800 shown in FIG. 8 includes a transceiver unit 8001.

The transceiver unit 8001 is configured to obtain a context from a second communication apparatus, where the second communication apparatus is a communication apparatus that provides a service for the first communication apparatus, and the context is a context of a terminal apparatus served by the second communication apparatus; and is further configured to send the context to a third communication apparatus, where the third communication apparatus is a communication apparatus that replaces the second communication apparatus to provide a service for the first communication apparatus. For example, the transceiver unit 8001 supports the first communication apparatus 800 in performing S501 to S503 and S505, or supports the first communication apparatus 800 in performing S601 to S603 and S605, or supports the first communication apparatus 800 in performing S702 to S703 and S705.

For descriptions related to the first communication apparatus, the second communication apparatus, the third communication apparatus, and the context, refer to the descriptions in the foregoing method embodiments.

Specifically, all content related to the steps in the foregoing method embodiments shown in FIG. 5A and FIG. 5B, FIG. 6A and FIG. 6B and FIG. 7A and FIG. 7B may be cited in function descriptions of corresponding functional modules. Details are not described herein again. The first communication apparatus 800 is configured to perform functions of the terminal in the communication method shown in FIG. 5A and FIG. 5B or FIG. 6A and FIG. 6B, and therefore can achieve a same effect as the foregoing communication method. The first communication apparatus 800 is configured to perform functions of the source satellite base station in the communication method shown in FIG. 7A and FIG. 7B, and therefore can achieve a same effect as the foregoing communication method.

FIG. 9 is a diagram of a structure of a second communication apparatus 900. The second communication apparatus 900 may be configured to perform functions of the second communication apparatus in the foregoing embodiments. In an implementation, the second communication apparatus 900 shown in FIG. 9 includes a processing unit 9001 and a transceiver unit 9002.

The processing unit 9001 is configured to obtain a context, where the context is a context of a terminal apparatus served by the second communication apparatus. For example, the processing unit 9001 may be configured to support the second communication apparatus 900 in performing S501, S601, or S702.

The transceiver unit 9002 is configured to send the context to the first communication apparatus. For example, the transceiver unit 9002 may be configured to support the second communication apparatus 900 in performing S502, S602, or S703.

For descriptions related to the first communication apparatus, the second communication apparatus, and the context, refer to the descriptions in the foregoing method embodiments.

Specifically, all content related to the steps in the foregoing method embodiments shown in FIG. 5A and FIG. 5B, FIG. 6A and FIG. 6B and FIG. 7A and FIG. 7B may be cited in function descriptions of corresponding functional modules. Details are not described herein again. The second communication apparatus 900 is configured to perform functions of the source satellite base station in the communication method shown in FIG. 5A and FIG. 5B, and therefore can achieve a same effect as the foregoing communication method. The second communication apparatus 900 is configured to perform functions of the last serving satellite base station in the communication method shown in FIG. 6A and FIG. 6B, and therefore can achieve a same effect as the foregoing communication method. The second communication apparatus 900 is configured to perform functions of the last serving core network device in the communication method shown in FIG. 7A and FIG. 7B, and therefore can achieve a same effect as the foregoing communication method.

FIG. 10 is a diagram of a structure of a third communication apparatus 1000. The third communication apparatus 1000 may be configured to perform functions of the third communication apparatus in the foregoing embodiments. In an implementation, the third communication apparatus 1000 shown in FIG. 10 includes a transceiver unit 1001 and a processing unit 1002.

The transceiver unit 1001 is configured to receive a context from a first communication apparatus. For example, the transceiver unit 1001 may be configured to support the third communication apparatus 1000 in performing S505, S605, or S705.

The processing unit 1002 is configured to provide a service for the first communication apparatus based on the context. For example, the processing unit 1002 may be configured to support the third communication apparatus 1000 in performing S506, S606, or S706.

For descriptions related to the first communication apparatus, the third communication apparatus, and the context, refer to the descriptions in the foregoing method embodiments.

Specifically, all content related to the steps in the foregoing method embodiments shown in FIG. 5A and FIG. 5B, FIG. 6A and FIG. 6B and FIG. 7A and FIG. 7B may be cited in function descriptions of corresponding functional modules. Details are not described herein again. The third communication apparatus 1000 is configured to perform functions of the target satellite base station in the communication method shown in FIG. 5A and FIG. 5B or FIG. 6A and FIG. 6B, and therefore can achieve a same effect as the foregoing communication method. The third communication apparatus 1000 is configured to perform functions of the target core network device in the communication method shown in FIG. 7A and FIG. 7B, and therefore can achieve a same effect as the foregoing communication method.

As mentioned above, the processing unit may be a processing module, a processor, or a controller. The processing unit may implement or execute various example logical blocks, modules, and circuits described with reference to content disclosed in this application. Alternatively, the processor may be a combination for implementing a computing function, for example, a combination of one or more microprocessors, or a combination of a DSP and a microprocessor. The transceiver unit may be a communication module, a transceiver circuit, a communication interface, or the like. Any communication apparatus mentioned above may further include a storage unit, and the storage unit is configured to store program code and data of any communication apparatus. The storage unit may be a storage module, or may be a memory. When the processing module is a processor, the communication module is a communication interface, and the storage module is a memory, the first communication apparatus 800, the second communication apparatus 900, or the third communication apparatus 1000 in embodiments of this application may be the communication apparatus 1100 shown in FIG. 11. For example, the terminal, the source satellite base station, the target satellite base station, the source core network device, and the target core network device mentioned above may use a composition structure shown in FIG. 11 or include a component shown in FIG. 11. FIG. 11 is a compositional diagram of a communication apparatus 1100 according to an embodiment of this application. As shown in FIG. 11, the communication apparatus 1100 may include a processor 1101, a communication line 1102, and a communication interface 1103.

Further, the communication apparatus 1100 may further include a memory 1104. The processor 1101, the memory 1104, and the communication interface 1103 may be connected via the communication line 1102.

The processor 1101 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another communication apparatus having a processing function, for example, a circuit, a component, or a software module.

The communication line 1102 is configured to perform information transmission between the components included in the communication apparatus 1100.

The communication interface 1103 is configured to communicate with another device or another communication network. The another communication network may be an ethernet, a radio access network (radio access network, RAN), a wireless local area network (wireless local area network, WLAN), or the like. The communication interface 1103 may be a radio frequency module, a transceiver, or any communication apparatus that can implement communication. In embodiments of this application, an example in which the communication interface 1103 is a radio frequency module is used for description. The radio frequency module may include an antenna, a radio frequency circuit, and the like. The radio frequency circuit may include a radio frequency integrated chip, a power amplifier, and the like.

The memory 1104 is configured to store instructions. The instructions may be a computer program.

The memory 1104 may be a read-only memory (read-only memory, ROM) or another type of a static storage device that may store static information and/or instructions, or may be a random access memory (random access memory, RAM) or another type of a dynamic storage device that may store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 1104 may exist independently of the processor 1101, or may be integrated with the processor 1101. The memory 1104 may be configured to store instructions, program code, some data, or the like. The memory 1104 may be located in the communication apparatus 1100, or may be located outside the communication apparatus 1100. This is not limited. The processor 1101 is configured to execute the instructions stored in the memory 1104, to implement a random access procedure preamble sending method provided in the following embodiments of this application.

In an example, the processor 1101 may include one or more CPUs, for example, a CPU 0 and a CPU 1 in FIG. 11.

In an optional implementation, the communication apparatus 1100 includes a plurality of processors. For example, in addition to the processor 1101 in FIG. 11, the communication apparatus 1100 may further include a processor 1107.

In an optional implementation, the communication apparatus 1100 further includes an output device 1105 and an input device 1106. The input device 1106 is a keyboard, a mouse, a microphone, a joystick, or the like, and the output device 1105 is a device such as a display or a speaker (speaker).

It should be noted that the communication apparatus 1100 may be a desktop computer, a portable computer, a network server, a mobile phone, a tablet computer, a wireless terminal, an embedded device, a chip system, or a device having a structure similar to that in FIG. 11. In addition, the composition structure shown in FIG. 11 does not constitute a limitation on the communication apparatus. In addition to the components shown in FIG. 11, the communication apparatus may include more or fewer components than those shown in the figure, or some components may be combined, or different component arrangements may be used.

In embodiments of this application, the chip system may include a chip, or may include a chip and another discrete component.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of a terminal device in any one of the foregoing embodiments including, for example, a data transmit end and/or a data receive end, for example, a hard disk drive or an internal memory of the terminal device. The computer-readable storage medium may alternatively be an external storage device of the terminal device, for example, a plug-in hard disk drive, a smart media card (smart media card, SMC), a secure digital (secure digital, SD) card, or a flash card (flash card) that is configured on the terminal device. Further, the computer-readable storage medium may further include both an internal storage unit and an external storage device of the terminal device. The computer-readable storage medium is configured to store the computer program and other programs and data required by the terminal device. The computer-readable storage medium may be further configured to temporarily store data that has been output or is to be output.

It should be understood that collection, storage, use, processing, transmission, provision, and disclosure of personal user information in the technical solutions of this application all comply with relevant laws and regulations and do not violate public order and good morals. For example, in the technical solutions in this application, the personal user information is processed with user authorization. A unified description is provided herein. Details are not described below again.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In embodiments of this application, "connection" means various connection manners such as a direct connection or an indirect connection, for implementing communication between devices. This is not limited in embodiments of this application.

Unless otherwise specified, "transmission" (transmit/transmission) in embodiments of this application refers to bidirectional transmission, and includes a sending action and/or a receiving action. Specifically, "transmission" in embodiments of this application includes data sending, data receiving, or data sending and receiving. That is, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

The foregoing descriptions about implementations allow a person skilled in the art to understand that, for the purpose of convenient and brief description, grouping of the foregoing functional modules is used as an example for illustration. In actual application, the foregoing functions can be allocated to different functional modules for implementation based on a requirement, that is, an inner structure of an apparatus is grouped into different functional modules to implement all or some of the functions described above.

In the several embodiments provided in this application, it should be understood that the disclosed communication apparatus and method may be implemented in other manners. For example, the described communication apparatus embodiments are merely examples. For example, grouping of the modules or units is merely logical function grouping. During actual implementation, another grouping manner may be used. For example, a plurality of units or components may be combined or integrated into another apparatus, or some characteristics may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may be or may not be physically separate, and components displayed as units may be one or more physical units, that is, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to conventional technologies, or all or some of the technical solutions may be implemented in a form of a software product. The software product is stored in a storage medium and includes several instructions for enabling a device such as a single-chip microcomputer or a chip or for enabling a processor (processor) to perform all or some of the steps of the methods in embodiments of this application. The storage medium includes any medium that can store program code, such as a USB flash drive, a removable hard disk drive, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first communication apparatus, wherein the method comprises:
obtaining a context from a second communication apparatus, wherein the second communication apparatus is a communication apparatus that provides a service for the first communication apparatus, and the context is a context of a terminal apparatus served by the second communication apparatus; and
sending the context to a third communication apparatus, wherein the third communication apparatus is a communication apparatus that replaces the second communication apparatus to provide a service for the first communication apparatus.

2. The method according to claim 1, wherein
the first communication apparatus is the terminal apparatus, the second communication apparatus is a first access network apparatus, and the third communication apparatus is a second access network apparatus.

3. The method according to claim 2, wherein the sending the context to the third communication apparatus comprises:
receiving first indication information from the second access network apparatus, wherein the first indication information indicates a first time-frequency resource; and
sending the context to the second access network apparatus by using the first time-frequency resource.

4. The method according to claim 2 or 3, wherein
the first indication information is carried in a random access response; or
the first indication information is carried in radio resource control RRC signaling.

5. The method according to any one of claims 2 to 4, wherein the method further comprises:
sending second indication information to the second access network apparatus, wherein the second indication information indicates to send the context to the second access network apparatus.

6. The method according to claim 5, wherein
the second indication information is carried in a random access request; or
the second indication information is carried in an RRC resume request message.

7. The method according to claim 1, wherein the first communication apparatus is an access network apparatus, the second communication apparatus is a first core network apparatus, and the third communication apparatus is a second core network apparatus.

8. The method according to claim 7, wherein a next generation NG interface is established between the access network apparatus and the second core network apparatus, and the sending the context to the third communication apparatus comprises:
sending next generation application protocol NGAP signaling to the second core network apparatus through the NG interface, wherein the NGAP signaling carries the context.

9. The method according to claim 2, wherein the obtaining the context from the second communication apparatus comprises:
receiving the context from the first access network apparatus based on radio resource control RRC release signaling.

10. The method according to any one of claims 1 to 9, wherein the obtaining the context from the second communication apparatus comprises:
sending a first request message to the second communication apparatus, wherein the first request message is used to request the context; and
receiving the context from the second communication apparatus.

11. The method according to claim 10, wherein
the first request message is a handover request message; or
the first request message is a context request message.

12. The method according to any one of claims 1 to 11, wherein the method further comprises:
receiving update information from the third communication apparatus, wherein the update information is used to update the context.

13. The method according to any one of claims 1 to 12, wherein the method further comprises:
caching the context.

14. A communication method, applied to a second communication apparatus, wherein the second communication apparatus is a communication apparatus that provides a service for a first communication apparatus, and the method comprises:
obtaining a context, wherein the context is a context of a terminal apparatus served by the second communication apparatus; and
sending the context to the first communication apparatus.

15. The method according to claim 14, wherein
the first communication apparatus is the terminal apparatus, and the second communication apparatus is a first access network apparatus.

16. The method according to claim 15, wherein the method further comprises:
sending radio resource control RRC release signaling, wherein the RRC release signaling indicates the first communication apparatus to receive the context.

17. The method according to claim 14, wherein
the first communication apparatus is an access network apparatus, and the second communication apparatus is a first core network apparatus.

18. The method according to claim 14 or 17, wherein the sending the context to the first communication apparatus comprises:
receiving a first request message from the first communication apparatus, wherein the first request message is used to request the context; and
sending the context to the first communication apparatus.

19. The method according to claim 18, wherein
the first request message is a handover request message; or
the first request message is a context request message.

20. A communication method, applied to a third communication apparatus, wherein the third communication apparatus is a communication apparatus that provides a service for the first communication apparatus, and the method comprises:
receiving a context from the first communication apparatus; and
providing the service for the first communication apparatus based on the context.

21. The method according to claim 20, wherein
the first communication apparatus is a terminal apparatus, and the third communication apparatus is a second access network apparatus.

22. The method according to claim 21, wherein the receiving the context from the first communication apparatus comprises:
sending first indication information to the terminal apparatus, wherein the first indication information indicates a first time-frequency resource; and
receiving the context from the terminal apparatus by using the first time-frequency resource.

23. The method according to claim 21 or 22, wherein
the first indication information is carried in a random access response; or
the first indication information is carried in radio resource control RRC signaling.

24. The method according to any one of claims 21 to 23, wherein the method further comprises:
receiving second indication information from the terminal, wherein the second indication information indicates to send the context to the second access network apparatus.

25. The method according to any one of claims 21 to 24, wherein
the second indication information is carried in a random access request; or
the second indication information is carried in an RRC resume request message.

26. The method according to claim 20, wherein the first communication apparatus is an access network apparatus, and the third communication apparatus is a second core network apparatus.

27. The method according to claim 26, wherein a next generation NG interface is established between the access network apparatus and the second core network apparatus, and the receiving the context from the first communication apparatus comprises:
receiving next generation application protocol NGAP signaling from the access network apparatus through the NG interface, wherein the NGAP signaling carries the context.

28. The method according to claim 20, wherein the method further comprises:
sending update information to the first communication apparatus, wherein the update information is used to update the context.

29. A first communication apparatus, wherein the first communication apparatus comprises:
a transceiver unit, configured to obtain a context from a second communication apparatus, wherein the second communication apparatus is a communication apparatus that provides a service for the first communication apparatus, and the context is a context of a terminal apparatus served by the second communication apparatus, wherein
the transceiver unit is further configured to send the context to a third communication apparatus, wherein the third communication apparatus is a communication apparatus that replaces the second communication apparatus to provide a service for the first communication apparatus.

30. A second communication apparatus, wherein the second communication apparatus is a communication apparatus that provides a service for a first communication apparatus, and the second communication apparatus comprises:
a processing unit, configured to obtain a context, wherein the context is a context of a terminal apparatus served by the second communication apparatus; and
a transceiver unit, configured to send the context to the first communication apparatus.

31. A third communication apparatus, wherein the third communication apparatus is a communication apparatus that provides a service for the first communication apparatus, and the third communication apparatus comprises:
a transceiver unit, configured to receive a context from the first communication apparatus; and
a processing unit, configured to provide the service for the first communication apparatus based on the context.

32. A communication apparatus, wherein the communication apparatus comprises a processor and a communication interface, and the processor and the communication interface are configured to support the communication apparatus in performing the communication method according to any one of claims 1 to 13, or performing the method according to any one of claims 14 to 19, or performing the communication method according to any one of claims 20 to 28.

33. A communication system, wherein the communication system comprises the first communication apparatus according to claim 29, the second communication apparatus according to claim 30, and the third communication apparatus according to claim 31.

34. A computer-readable storage medium, wherein the computer-readable storage medium stores computer instructions, and when the computer instructions are run on a computer, the computer is caused to perform the method according to any one of claims 1 to 13, or the computer is caused to perform the method according to any one of claims 14 to 19, or the computer is caused to perform the method according to any one of claims 20 to 28.

35. A computer program product, wherein the computer program product comprises computer instructions, and when the computer instructions are run on a computer, the computer is caused to perform the method according to any one of claims 1 to 13, or the computer is caused to perform the method according to any one of claims 14 to 19, or the computer is caused to perform the method according to any one of claims 20 to 28.
